# EUROPÄISCHE PATENTSCHRIFT

(11) **EP 1 041 121 B1**
(45) Veröffentlichungstag und Bekanntmachung des Hinweises auf die Patenterteilung: **27.08.2003**
(21) Anmeldenummer: 00810226.1
(22) Anmeldetag: 17.03.2000
(51) Int. Cl.: C09B 62/44, C09B 62/08

(54) **Farbstoffe, Verfahren zu deren Herstellung und deren Verwendung**
Dyes, process for their preparation and use thereof
Colorants, leur procédé de préparation et leur utilisation

(30) Priorität: 22.03.1999 EP 99810250
(43) Veröffentlichungstag der Anmeldung: 04.10.2000
(73) Patentinhaber: Ciba Specialty Chemicals Holding Inc., 4057 Basel (CH)
(72) Erfinder: Tzikas, Athanassios, 4133 Pratteln (CH); Klier, Herbert, 79588 Efringen-Kirchen (DE)

(56) Entgegenhaltungen:
- EP-A- 0 219 232
- EP-A- 0 471 454
- EP-A- 0 581 731
- EP-A- 0 581 732
- EP-A- 0 592 980
- EP-A- 0 626 429
- EP-A- 0 719 840

## Beschreibung

Die vorliegende Erfindung betrifft neue Farbstoffe, insbesondere Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Faserreaktive Farbstoffe werden beispielsweise in EP-A-0 626 426, EP-A-0 581 731, EP-A-0 719 840 oder EP-A-0 471 454 beschrieben.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Farbstoffe, insbesondere Reaktivfarbstoffe, für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen die gestellte Aufgabe weitgehend gelöst wird.

Gegenstand der vorliegenden Erfindung sind daher Farbstoffe der Formel (1) 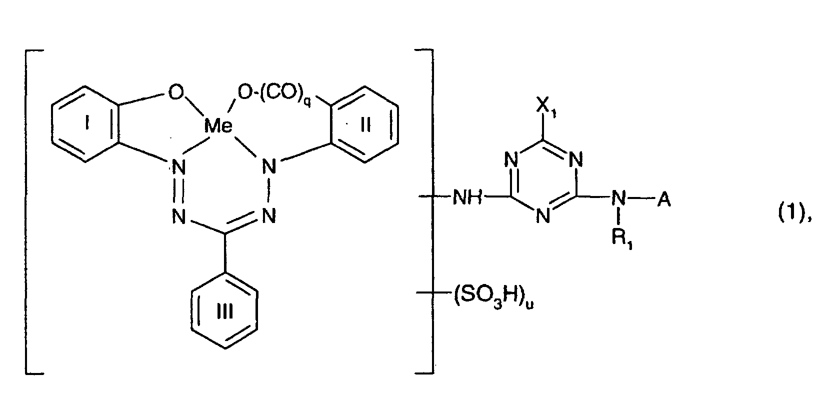 worin
Me Cu oder Ni ist,
R₁ Wasserstoff oder gegebenenfalls substituiertes C₁-C₄-Alkyl bedeutet oder R₁ die Bedeutung von A hat,
X₁ Halogen, Hydroxy, C₁-C₄-Alkoxy, gegebenenfalls substituiertes C₁-C₄-Alkylthio oder Amino oder ein gegebenenfalls weitere Heteroatome enthaltender N-Heterocyclus ist, u für die Zahl 1, 2, 3 oder 4 steht,
q die Zahl 0 oder 1 ist,
die Benzolringe I, II oder III gegebenenfalls weitersubstituiert sind, und
A für einen Rest der Formel (3) 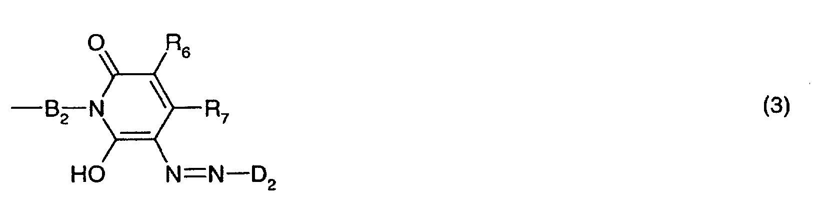
steht, worin
B₂ ein aliphatisches Brückenglied ist,
R₆ Wasserstoff, Cyano, Carbamoyl oder Sulfomethyl ist,
R₇ Wasserstoff oder C₁-C₄-Alkyl ist, und
D₂ dem Rest der Formel (9a), (9b), (9c), (9d), (9e) oder (9f) 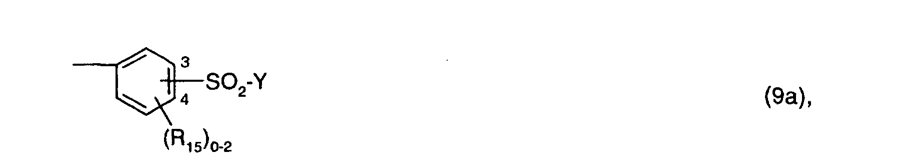 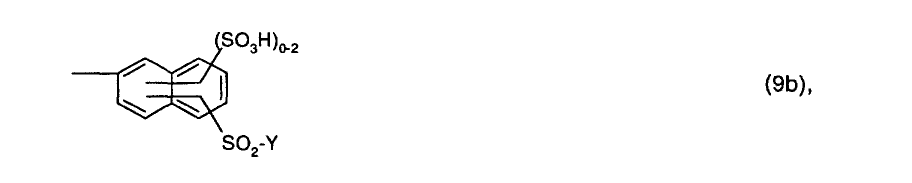 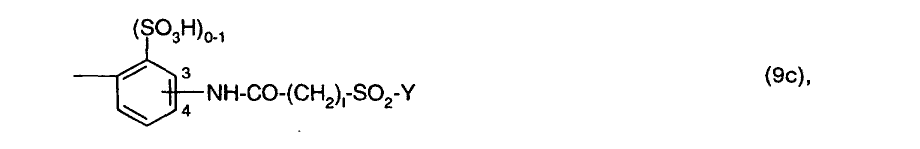 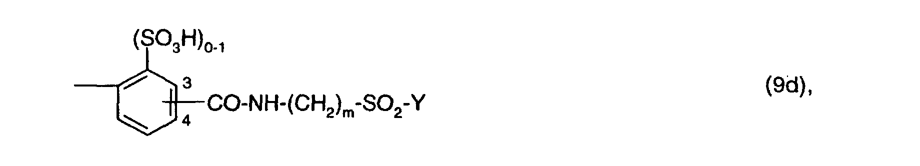 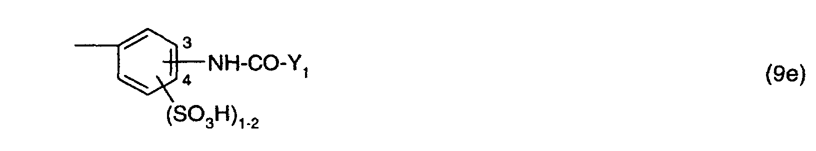 oder 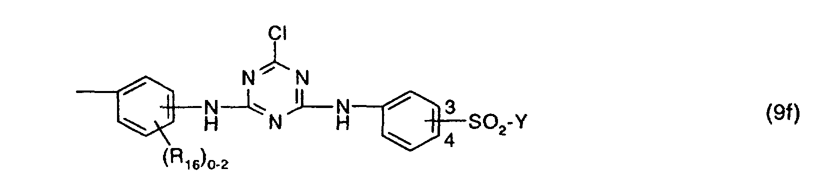 entspricht, worin
(R₁₅)₀₋₂ und (R₁₆)₀₋₂ unabhängig voneinander für 0 bis 2 gleiche oder voneinander verschiedene Substituenten ausgewählt aus der Gruppe Halogen, C₁-C₄-Alkyl, C₁-C₄-Alkoxy und Sulfo, insbesondere Methyl, Methoxy und Sulfo, stehen,
Y Vinyl, β-Chlorethyl oder β-Sulfatoethyl ist,
Y₁ für eine Gruppe -CH(Br)-CH₂-Br oder -C(Br)=CH₂ steht,
I die Zahl 2 oder 3, insbesondere 3, bedeutet, und
m die Zahl 2 oder 3, insbesondere 2, ist, wobei
der Farbstoff der Formel (1) mindestens zwei Sulfogruppen enthält.

Die Farbstoffe der Formel (1) enthalten mindestens zwei, vorzugsweise 2 bis 6 und insbesondere 2 bis 4 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triethanolamins oder Na/Li- oder Na/Li/NH₄-Mischsalze genannt.

Me bedeutet bevorzugt Cu.

Bedeutet R₁ gegebenenfalls substituiertes C₁-C₄-Alkyl, kann es sich um unsubstituiertes oder z.B. durch Hydroxy, Sulfo, Sulfato, Carboxy, Cyano, Halogen, C₁-C₄-Alkoxycarbonyl oder Carbamoyl, insbesondere durch Hydroxy, Sulfo, Sulfato oder Carboxy substituiertes Methyl, Ethyl, n- oder iso-Propyl oder n-, sec.-, tert.- oder iso-Butyl handeln.

R₁ steht bevorzugt für Wasserstoff, unsubstituiertes oder durch Hydroxy substituiertes C₁-C₄-Alkyl oder für einen Rest A, besonders bevorzugt für Wasserstoff, Methyl, Ethyl oder β-Hydroxyethyl oder für einen Rest A und ganz besonders bevorzugt für Wasserstoff oder für einen Rest A.

X₁ als Halogen bedeutet z.B. Fluor, Chlor oder Brom.

Als C₁-C₄-Alkoxy kommt für X₁ z.B. Methoxy, Ethoxy, n-Propoxy, Isopropoxy, n-Butoxy oder Isobutoxy, vorzugsweise Methoxy oder Ethoxy und insbesondere Methoxy, in Betracht,

X₁ als C₁-C₄-Alkylthio bedeutet beispielsweise Methylthio, Ethylthio, n-Propylthio, Isopropylthio oder n-Butylthio, insbesondere Ethylthio oder n-Propylthio. Die genannten Reste sind unsubstituiert oder im Alkylteil durch Hydroxy, Carboxy oder Sulfo substituiert. Bevorzugt sind die substituierten Reste.

X₁ als gegebenenfalls substituiertes Amino bedeutet Amino, welches unsubstituiert oder am N-Atom substituiert ist, wie z.B. folgende Reste:
N-Mono- oder N,N-Di-C₁-C₄-Alkylamino, welches sowohl die unsubstituierten wie auch die im Alkylteil z.B. durch C₁-C₄-Alkoxy, Hydroxy, Carboxy, Sulfo oder Sulfato substituierten Reste umfasst; bevorzugt sind die im Alkylteil substituierten Reste;
C₅-C₇-Cycloalkylamino, welches sowohl die unsubstituierten wie auch die im Cycloalkylring z.B. durch C₁-C₄-Alkyl, insbesondere Methyl, substituierten Reste umfasst; bevorzugt als solche Reste sind die entsprechenden Cyclohexylreste;
Phenylamino oder N-C₁-C₄-Alkyl-N-phenylamino, welches sowohl die unsubstituierten wie auch die im Phenylring z.B. durch C₁-C₄-Alkyl, C₁-C₄-Alkoxy, Halogen, Carboxy oder Sulfo substituierten Reste umfasst; bevorzugt sind diese Reste im Phenylring unsubstituiert oder durch Sulfo substituiert.

Als gegebenenfalls weitere Heteroatome enthaltende N-Heterocyclen kommt für X₁ z.B. Morpholino oder Piperidin-1-yl in Betracht.

Bevorzugt bedeutet X₁ Fluor oder Chlor.
u bedeutet bevorzugt die Zahl 1, 2 oder 3, insbesondere 2 oder 3.
q bedeutet bevorzugt die Zahl 1.

Bei B₂ als aliphatisches Brückenglied handelt es sich unabhängig voneinander z.B. um geradkettiges oder verzweigtes gegebenenfalls durch Hydroxy, C₁-C₄-Alkoxy, Sulfato oder Sulfo substituiertes und/oder einfach oder mehrfach durch -O- oder -NR'- unterbrochenes C₂-C₁₂-Alkylen, worin R' Wasserstoff oder C₁-C₄-Alkyl, vorzugsweise Wasserstoff, Methyl oder Ethyl und insbesondere bevorzugt Wasserstoff ist. B₂ steht bevorzugt für geradkettiges oder verzweigtes C₂-C₆-Alkylen, welches unsubstituiert oder durch Hydroxy, Sulfo oder Sulfato substituiert ist, und besonders bevorzugt für unsubstituiertes geradkettiges oder verzweigtes C₂-C₆-Alkylen. Beispiele für besonders bevorzugte Reste B₁ und B₂ sind 1,2-Ethylen, 1,3-Propylen, 2-Hydroxy-1,3-Propylen, 1,4-Butylen, 2-Methyl-1,5-pentylen, 1,6-Hexylen, besonders 1,2-Propylen und 1,2-Ethylen und ganz besonders 1,2-Ethylen.

Für die Benzolringe I, II und III kommen farbstoffübliche Substituenten in Betracht. Als Beispiele seien die folgenden genannt: C₁-C₄-Alkyl, worunter Methyl, Ethyl, n- oder iso-Propyl, n-, iso-, sec.- oder tert.-Butyl zu verstehen ist; C₁-C₄-Alkoxy, worunter Methoxy, Ethoxy, n- oder iso-Propoxy oder n-, iso-, sec.- oder tert.-Butoxy zu verstehen ist; Hydroxy-C₁-C₄-Alkoxy; Phenoxy; gegebenenfalls im Alkylteil durch Hydroxy oder C₁-C₄-Alkoxy substituiertes C₂-C₆-Alkanoylamino, wie z.B. Acetylamino, Hydroxyacetylamino, Methoxyacetylamino oder Propionylamino; gegebenenfalls im Phenylteil durch Hydroxy, Sulfo, Halogen, C₁-C₄-Alkyl oder C₁-C₄-Alkoxy substituiertes Benzoylamino; gegebenenfalls im Alkylteil durch Hydroxy, C₁-C₄-Alkyl oder C₁-C₄-Alkoxy substituiertes C₁-C₆-Alkoxycarbonylamino; gegebenenfalls im Phenylteil durch Hydroxy, C₁-C₄-Alkyl oder C₁-C₄-Alkoxy substituiertes Phenoxycarbonylamino; Amino; gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, wie z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, γ-Sulfo-n-propylamino, β-Sulfatoethylamino, N-(3-Sulfobenzyl)-amino, N-Ethyl-N-(3-Sulfobenzyl)-amino, N-(β-Sulfoethyl)-N-benzylamino; Cyclohexylamino; gegebenenfalls im Phenylteil durch Nitro, C₁-C₄-Alkyl, C₁-C₄-Alkoxy, Carboxy, Halogen oder Sulfo substituiertes N-Phenylamino oder N-C₁-C₄-Alkyl-N-phenylamino; C₁-C₄-Alkoxycarbonyl, z.B. Methoxy- oder Ethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfomethyl; Carbamoyl; N-C₁-C₄-Alkylcarbamoyl, wie z.B. N-Methylcarbamoyl oder N-Ethylcarbamoyl; Carbamido; Sulfamoyl; N-C₁-C₄-Alkylsulfamoyl, wie z.B. N-Methylsulfamoyl oder N-Ethylsulfamoyl; gegebenenfalls im Phenylteil durch Sulfo oder Carboxy substituiertes N-Phenylsulfamoyl oder N-C₁-C₄-Alkyl-N-phenylsulfamoyl; C₁-C₄-Alkylsulfonyl wie z.B. Methyl- oder Ethylsulfonyl.

Bevorzugt kommen als weitere Substituenten in den Benzolringen I, II oder III Methyl, Ethyl, Methoxy, Ethoxy, Acetylamino, Benzylamino, Amino, Chlor, Brom, Ureido, Hydroxy, Carboxy oder Sulfomethyl und insbesondere Methyl, Ethyl, Methoxy, Ethoxy, Chlor, Brom, Hydroxy oder Carboxy in Betracht.

Bevorzugt steht I für die Zahl 3 und m für die Zahl 2.

Als C₁-C₄-Alkyl kommen für R₁₅ und R₁₆ unabhängig voneinander z.B. Methyl, Ethyl, n-Propyl, Isopropyl, n-Butyl, sek.-Butyl, tert.-Butyl oder Isobutyl, vorzugsweise Methyl oder Ethyl und insbesondere Methyl, in Betracht.

Als C₁-C₄-Alkoxy kommen für R₁₅ und R₁₆ unabhängig voneinander z.B. Methoxy, Ethoxy, n-Propoxy, Isopropoxy, n-Butoxy oder Isobutoxy, vorzugsweise Methoxy oder Ethoxy und insbesondere Methoxy, in Betracht.

Als Halogen kommen für R₁₅ und R₁₆ unabhängig voneinander z.B. Fluor, Chlor oder Brom, vorzugsweise Chlor oder Brom und insbesondere Chlor, in Betracht.

Die Zahlen in den Resten der Formeln (9a), (9c), (9d), (9e) und (9f) kennzeichnen die möglichen Bindungspositionen des faserreaktiven Rests.

Im Fall der Reste der Formeln (9a), (9b), (9d) und (9f) ist Y bevorzugt Vinyl oder β-Sulfatoethyl.

Im Fall des Restes der Formeln (9c) ist Y bevorzugt β-Chlorethyl.

Bevorzugt bedeutet D₂ einen Rest der Formel (9a) oder (9b) und insbesondere (9a).

R₇ als C₁-C₄-Alkyl ist z.B. Methyl, Ethyl, n- oder iso-Propyl oder n-, sec.-, tert.- oder iso-Butyl, vorzugsweise Methyl oder Ethyl und insbesondere Methyl.

R₆ steht bevorzugt für Carbamoyl oder Sulfomethyl, insbesondere Carbamoyl.

R₇ ist bevorzugt Methyl oder Ethyl und insbesondere Methyl.

Der Formazanrest im Farbstoff der Formel (1) entspricht bevorzugt einem Rest der Formel (11) oder (12) 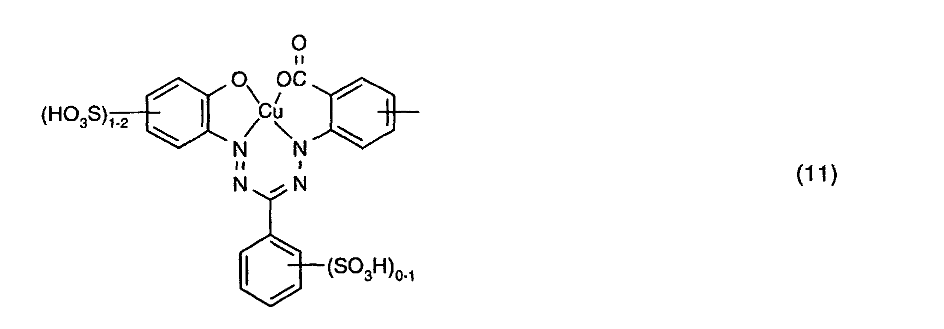 oder 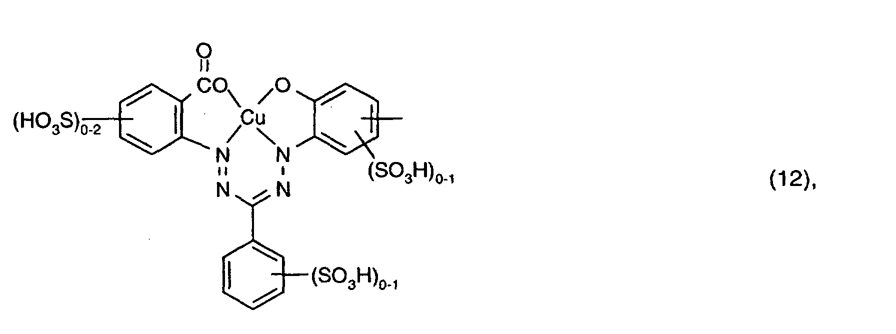 vorzugsweise einem Rest der Formel (12).

Die Formazanreste in den erfindungsgemässen Farbstoffen der Formel (1) bedeuten besonders bevorzugt die Reste der Formel (12a) oder (12b) 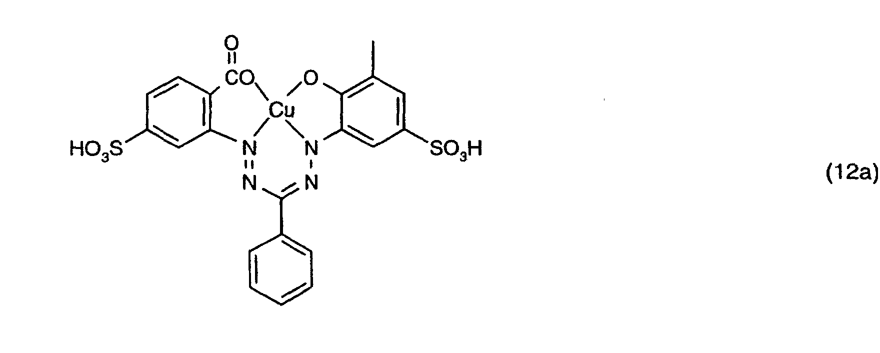 oder 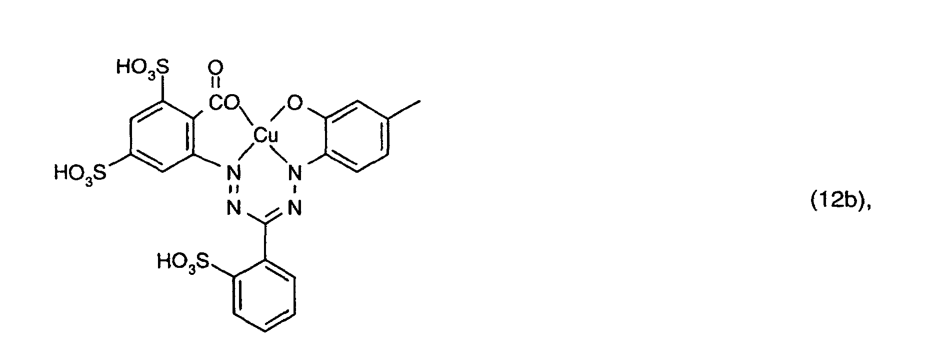 insbesondere (12a).

Bevorzugt sind die erfindungsgemässen Farbstoffe der Formel (1), dadurch gekennzeichnet, dass sie der Formel (1a) 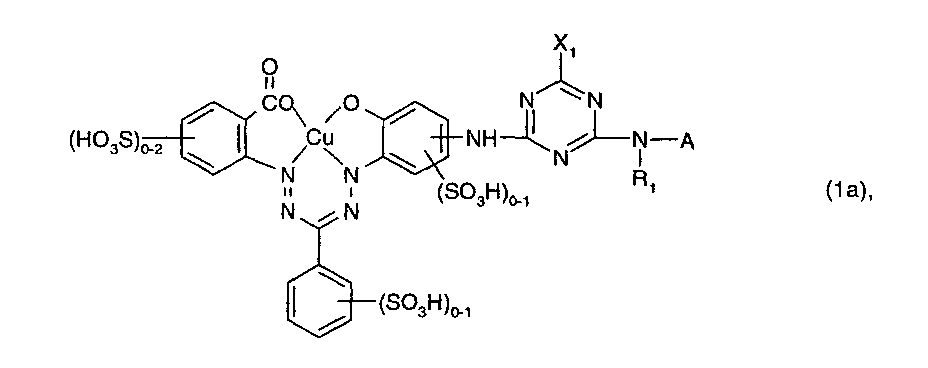 entsprechen, worin
X₁ Fluor oder Chlor ist,
R₁ Wasserstoff bedeutet oder R₁ die Bedeutung von A hat, und
A für einen Rest der Formel (3a) 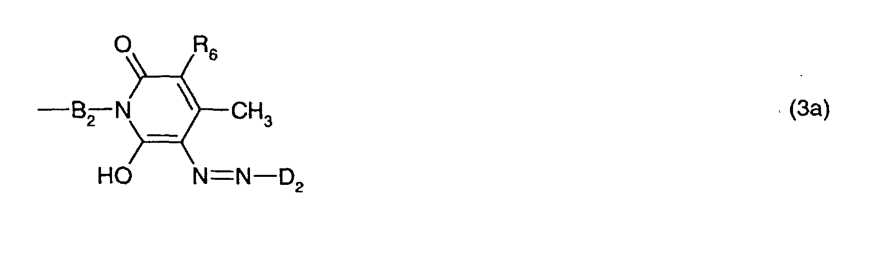 steht, worin
B₂ geradkettiges oder verzweigtes C₂-C₆-Alkylen ist,
D₂ einem Rest der Formel (9a), (9b), (9c), (9d), (9e) oder (9f) entspricht, wobei den genannten Resten die oben angegebenen Bedeutungen und Bevorzugungen zukommen, und
R₆ Carbamoyl oder Sulfomethyl, insbesondere Carbamoyl, ist.

Besonders bevorzugt sind die erfindungsgemässen Farbstoffe der Formel (1), dadurch gekennzeichnet, dass sie der Formel (1a') 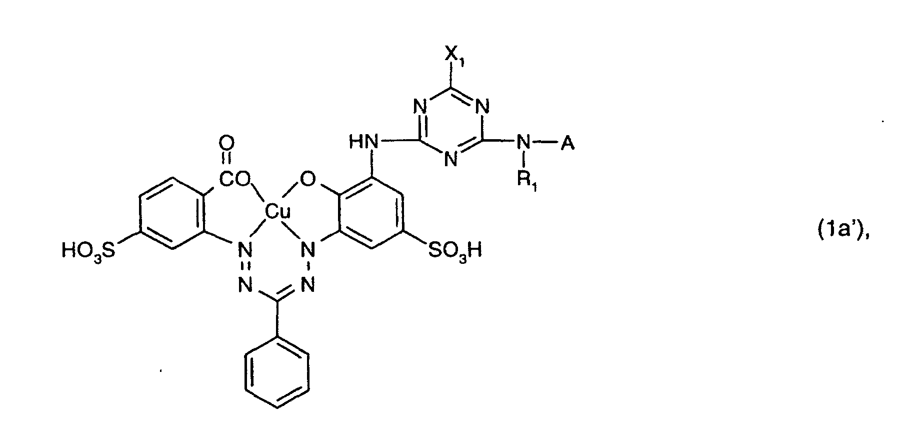 entsprechen, worin für
X₁, R₁ und A die oben unter der Formel (1a) genannten Bedeutungen und Bevorzugungen gelten.

Gegenstand der vorliegenden Erfindung ist ferner ein Verfahren zur Herstellung der erfindungsgemässen Farbstoffe, dadurch gekennzeichnet, dass man je in etwa 1 Moläquivalent einer Verbindung der Formel (13) 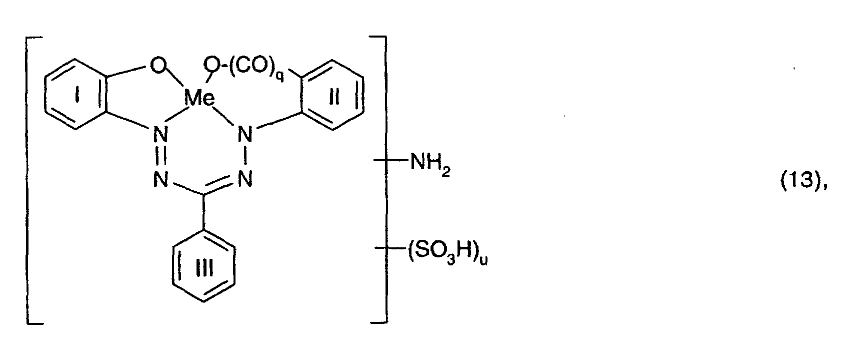 eine Verbindung der Formel (14) 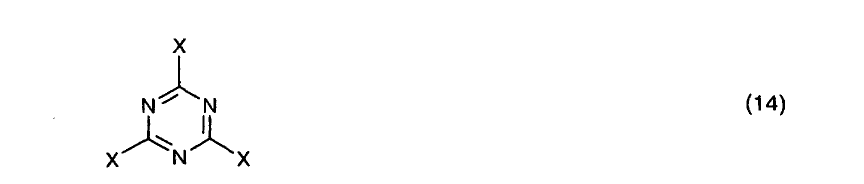 und ein Amin der Formel (15) 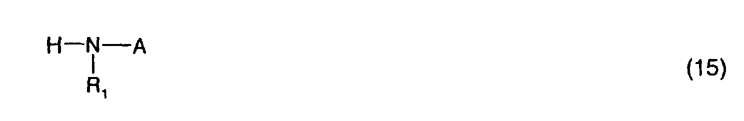 in beliebiger Reihenfolge miteinander umsetzt, wobei für A, Me, R₁, u und q die oben angegebenen Bedeutungen und Bevorzugungen gelten und X Halogen, insbesondere Fluor oder Chlor bedeutet.

Die einzelnen oben angegebenen Verfahrensschritte können in unterschiedlicher Reihenfolge, gegebenenfalls teilweise auch gleichzeitig, ausgeführt werden, so dass verschiedene Verfahrensvarianten möglich sind. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante besteht darin, dass man eine Verbindung der Formel (13) mit Cyanurchlorid oder Cyanurfluorid kondensiert und das erhaltene Produkt mit einer Verbindung der Formel (15) umsetzt.

Die Kondensationsreaktionen zwischen den Verbindungen der Formeln (13), (14) und (15) erfolgen im allgemeinen analog zu bekannten Verfahren, in der Regel in wässriger Lösung bei Temperaturen von z.B. 0 bis 30°C und einem pH-Wert von z.B. 3 bis 7. Anstelle der Verbindung der Formel (15) kann auch das entsprechende Vorprodukt der Formel (18) 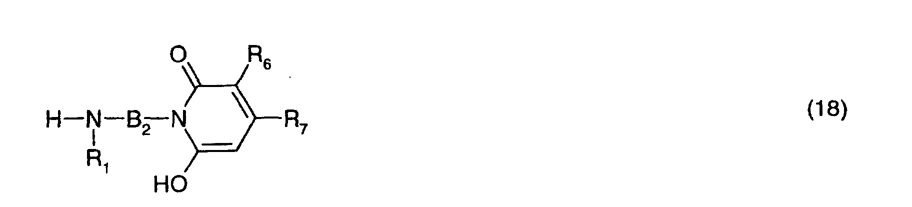 in das Verfahren eingesetzt und der Rest A erst im weiteren Verlauf des Verfahrens, durch Diazotierung eines Amins der Formel (16b)

D₂-NH₂ (16b)

und nachfolgende Kupplungsreaktion, fertiggestellt werden. Für die B₂, D₂, R₆ und R₇ gelten die oben angegebenen Bedeutungen.

Die Verbindung der Formel (15), worin A einen Rest der Formel (3) bedeutet, wird erhalten, indem man ein Amin der Formel (16b) diazotiert und auf eine Verbindung der Formel (18) kuppelt.

Die Diazotierung der Verbindung der Formel (16b) und ihre Kupplung auf die Verbindung der Formel (18), oder auf das gemäss der oben beschriebenen Vorgehensweise aus der Verbindung der Formel (18) erhaltene Kondensationsprodukt, erfolgt in üblicher Weise, z.B. indem man die Verbindung der Formel (16b) in mineralsaurer Lösung, z.B. salzsaurer Lösung mit einem Nitrit, z.B. Natriumnitrit, bei niedriger Temperatur, z.B. bei 0 bis 5°C, diazotiert und anschliessend bei einem neutralen bis leicht sauren pH-Wert, z.B. bei pH 3 bis 7, und niedrigen Temperaturen, z.B. 0 bis 30°C, mit der entsprechenden Kupplungskomponente kuppelt.

Die Verbindungen der Formeln (13), (16b) und (18) sind bekannt oder können in Analogie zu bekannten Verbindungen hergestellt werden.

Die gemäss dem oben beschriebenen Verfahren erhältlichen Triazinylverbindungen enthalten noch ein Halogenatom, welches durch Reaktion mit einer Verbindung der Formel X₁-H bei erhöhter Temperatur, vorzugsweise 20 bis 70°C, und einem neutralen bis leicht alkalischen pH-Wert, der je nach eingesetzter Verbindung der Formel X₁-H z.B. 7 bis 9 beträgt, in eine Gruppe X₁ umgewandelt werden kann, worin X₁ die oben angegebenen Bedeutungen ausser Halogen hat. Vorteilhafterweise setzt man einen Überschuss der Verbindung der Formel X₁-H ein.

Das Endprodukt kann gegebenfalls noch einer Umwandlungsreaktion unterzogen werden. Eine solche Umwandlungsreaktion ist beispielsweise die Überführung einer in D₂ enthaltenen, vinylierbaren Reaktivgruppe in ihre Vinylform durch Behandeln mit verdünnter Natronlauge, wie z.B. die Überführung der β-Sulfatoethylsulfonyl- oder β-Chlorethylsulfonylgruppe in den Vinylsulfonylrest. Solche Reaktionen sind an sich bekannt.

Die erfindungsgemässen Verbindungen der Formel (1) eignen sich als Farbstoffe zum Färben und Bedrucken der verschiedensten Materialien, wie hydroxylgruppenhaltigen oder stickstoffhaltigen Fasermaterialien. Als Beispiele für stickstoffhaltige Fasermaterialien seien Seide, Leder, Wolle, Polyamidfasern und Polyurethane genannt. Die erfindungsgemässen Farbstoffe sind insbesondere zum Färben und Bedrucken von cellulosehaltigen Fasermaterialien aller Art geeignet. Solche cellulosehaltige Fasermaterialien sind beispielsweise die natürlichen Cellulosefasern, wie Baumwolle, Leinen und Hanf, sowie Zellstoff und regenerierte Cellulose, vorzugsweise Baumwolle. Die erfindungsgemässen Farbstoffe sind auch zum Färben oder Bedrucken von cellulosehaltigen Mischgeweben, z.B. von Gemischen aus Baumwolle und Polyamidfasern oder besonders von Baumwolle/Polyestermischfasern geeignet.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 36,3 Teile eines Amins der Formel D₁₀-NH₂, worin D₁₀ einen Rest der Formel 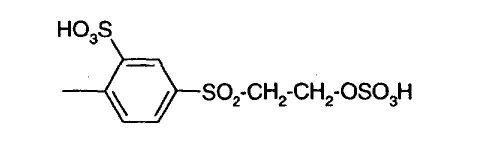 bedeutet, werden in 350 Teilen Wasser unter Zugabe einer Natriumcarbonatlösung neutral gelöst und 7 Teile Natriumnitrit zugegeben. Diese Lösung tropft man auf eine Mischung aus 300 Teilen Eis/Wasser und 30 Teilen konz. Salzsäure. Die Reaktionsmischung wird eine Stunde bei 0°C gerührt.

Beispiel 2: Zu einer neutralen Lösung von 41,2 Teilen eines Amins der Formel D₁₁-NH₂, worin D₁₁ einen Rest der Formel 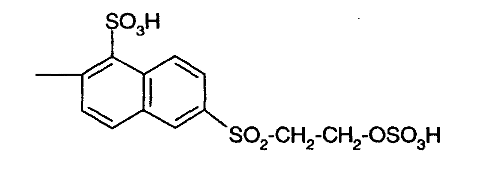 bedeutet, in 400 Teilen Wasser werden 25 Teile einer 4 N Natriumnitritlösung gegeben. Diese Lösung tropft man auf eine Mischung aus 300 Teilen Eis/Wasser und 30 Teilen konz. Salzsäure. Die Reaktionsmischung wird eine Stunde bei 0°C gerührt.

Beispiele 3 bis 22: Analog der in den Beispielen 1 oder 2 beschriebenen Vorgehensweise lassen sich die Diazoverbindungen der in Tabelle 1 genannten Amine herstellen, wenn man anstelle der in den Beispielen 1 oder 2 genannten Amine der Formel D₁₀-NH₂ oder D₁₁-NH₂ eine äquimolare Menge der in der Tabelle 1 genannten Amine der Formel D_{xy}-NH₂ verwendet.

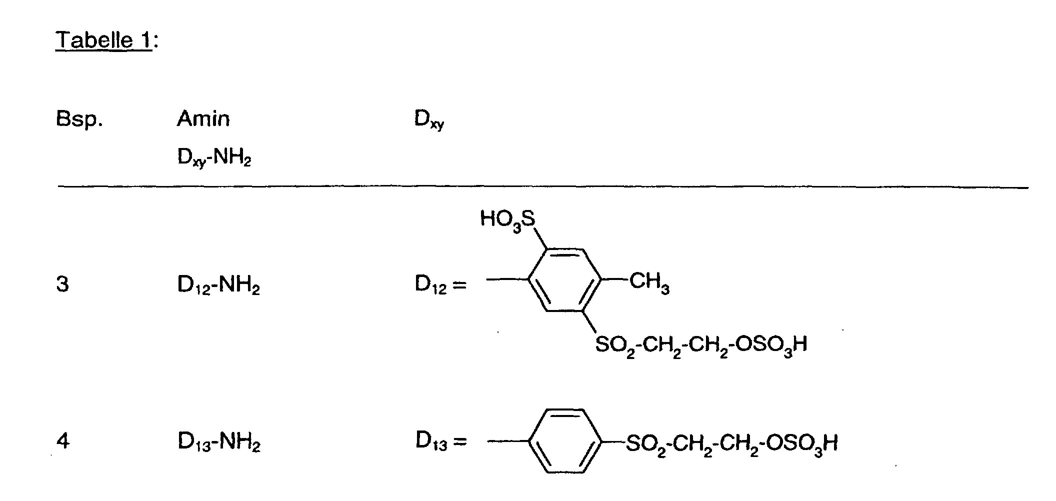

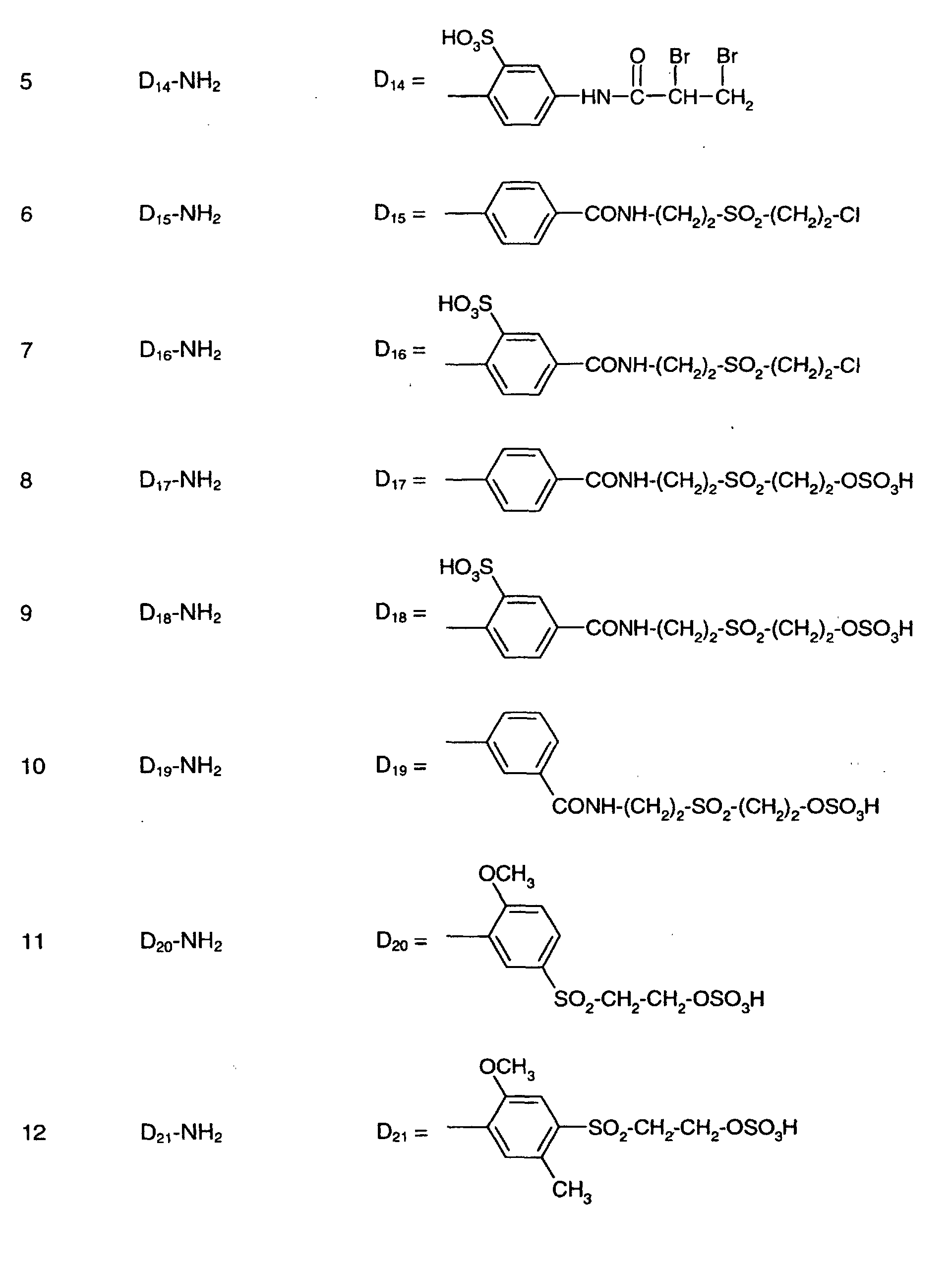

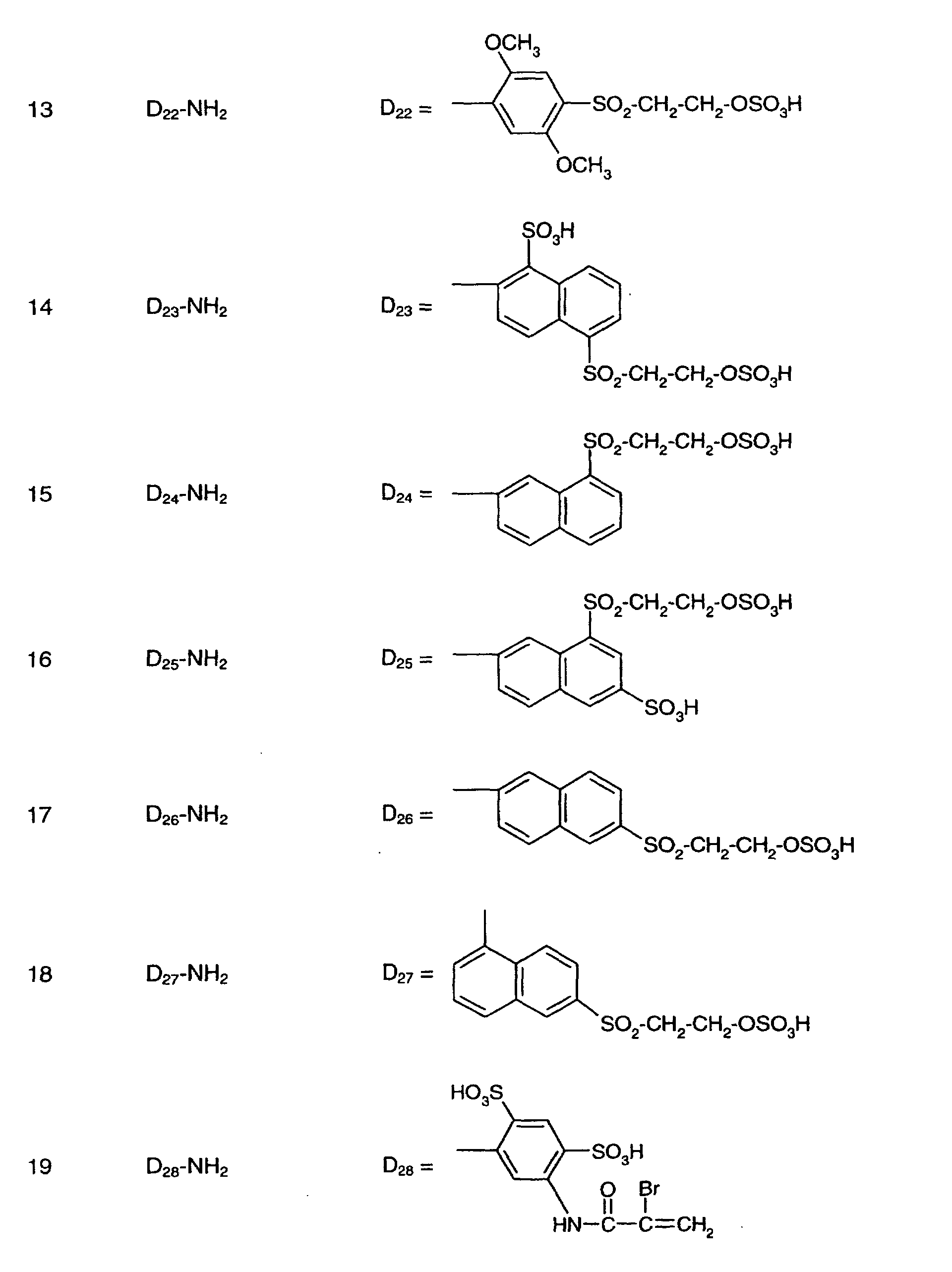

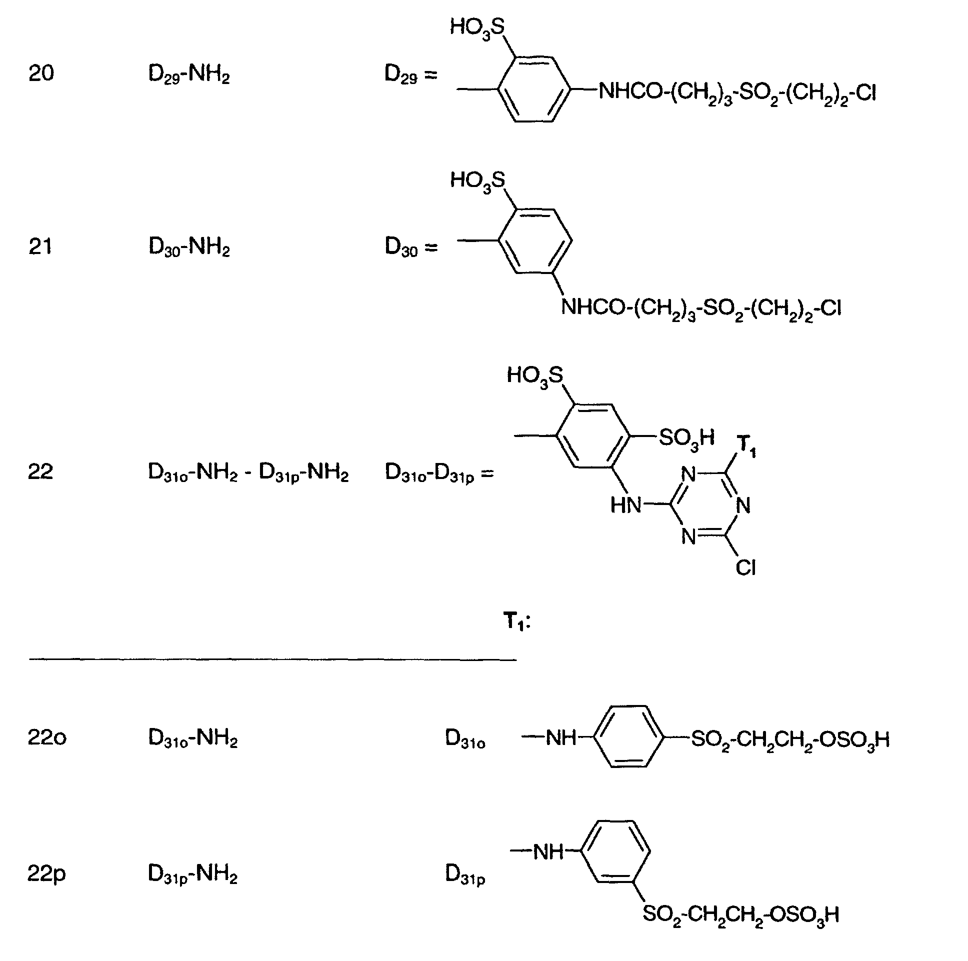

Beispiel 23a: Die gemäss Beispiel 1 erhaltene saure Suspension der Diazoverbindung tropft man zu einer Lösung aus 21,3 Teilen der Pyridon-Kupplungskomponente der Formel 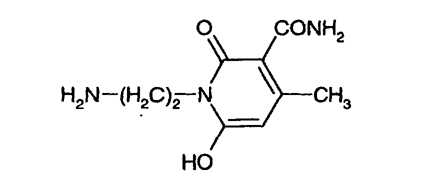 in 600 Teilen Wasser. Die Temperatur wird bei 5°C und der pH durch Zugabe einer Natriumhydroxydlösung bei 3 bis 5 gehalten. Man erhält die Suspension eines gelben Farbstoffs, der in Form der freien Säure der Formel 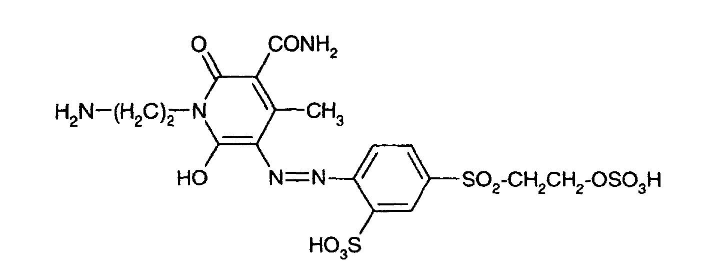 entspricht.

Beispiel 23b: In Analogie zu der in Beispiel 23a beschriebenen Vorgehensweise erhält man aus der Pyridon-Kupplungskomponente der Formel 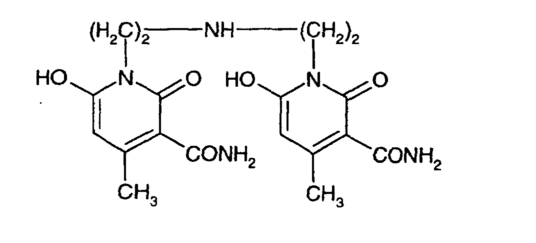 die Suspension eines gelben Farbstoffs, der in Form der freien Säure der Formel 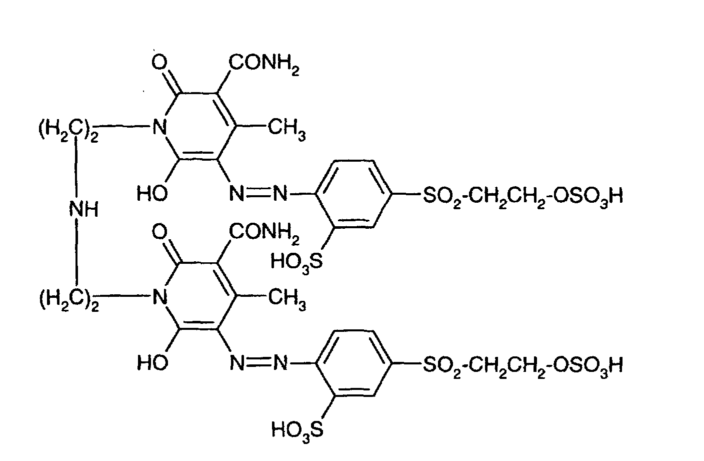 entspricht.

Beispiel 24: Die gemäss Beispiel 2 erhaltene saure Suspension der Diazoverbindung tropft man zu einer kalten Lösung aus 21 Teilen der Pyridon-Kupplungskomponente aus Beispiel 23a in 300 Teilen Wasser, wobei der pH durch Zugabe einer Natriumhydroxydlösung bei 7 gehalten wird. Es wird eine Stunde gerührt und man lässt die Reaktionsmischung währenddessen auf 20°C erwärmen. Man erhält die Suspension eines gelben Farbstoffs, der in Form der freien Säure der Formel 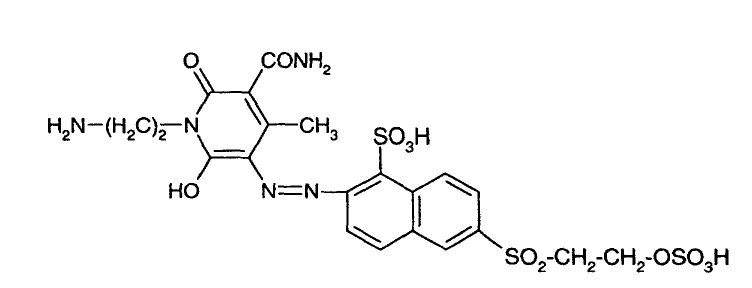 entspricht.

Beispiel 25: Zu einer neutralen Lösung von 60 Teilen des Kupfer-Komplexes von 5-Amino-3-[3-phenyl-5-(2-carboxy-5-sulfophenyl)-1-formazano]-4-hydroxybenzolsulfonsäure und 5 Teilen Dinatriumhydrogenphosphat in 500 Teilen Wasser werden bei einer Temperatur unterhalb von 2°C 14 Teile Trifluortriazin getropft, wobei der pH-Wert durch Zugabe einer Natriumhydroxydlösung konstant gehalten wird. Man erhält die Lösung einer Verbindung, welche in Form der freien Säure der Formel 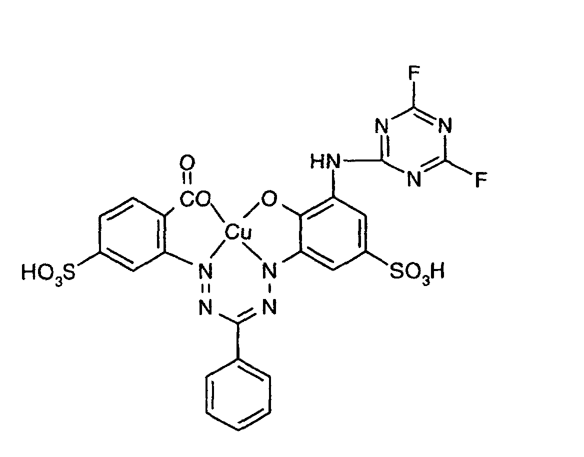 entspricht.

Beispiel 26: In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 60 Teilen des Kupfer-Komplexes von 5-Amino-3-[3-phenyl-5-(2-carboxy-5-sulfophenyl)-1-formazano]-4-hydroxybenzolsulfonsäure in 500 Teilen Wasser. Die Temperatur wird bei 2 bis 5 °C und der pH-Wert durch Zugabe von Natriumhydroxydlösung bei 5 gehalten. Man erhält die Lösung einer Verbindung; welche in Form der freien Säure der Formel 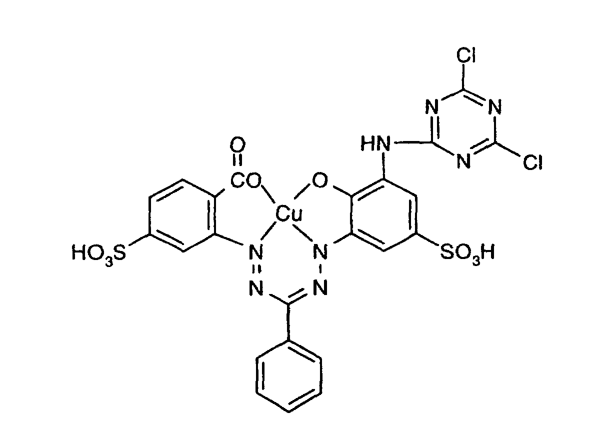 entspricht.

Beispiel 27a: Zur gemäss Beispiel 23a erhaltenen Suspension des gelben Farbstoffs wird die gemäss Beispiel 25 erhaltene Lösung gegeben, wobei der pH durch Zugabe einer Natriumhydroxydlösung bei 7 bis 8 gehalten wird. Die Temperatur beträgt 20 bis 30 °C. Anschliessend wird die erhaltene Lösung dialytisch vom Salz befreit und gefriergetrocknet. Man erhält 110 Teile einer Verbindung, die in Form der freien Säure der Formel (101) 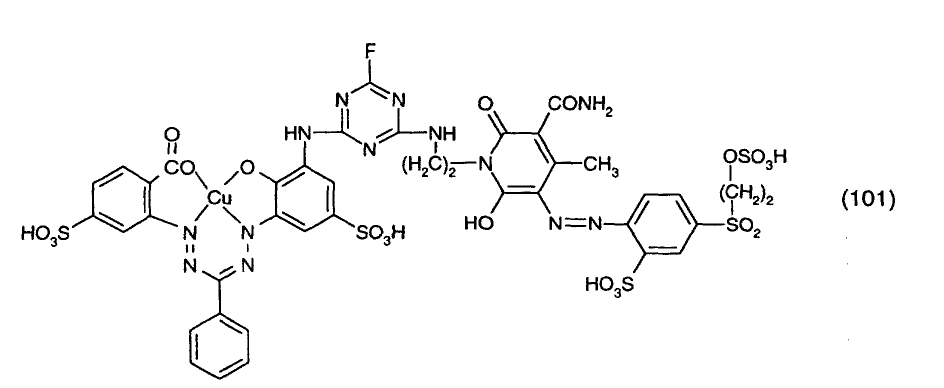 entspricht und Baumwolle in grünen Farbtönen mit guten Allgemeinechtheiten färbt.

Beispiel 27b: Analog der in Beispiel 27a beschriebenen Vorgehensweise erhält man aus der gemäss Beispiel 23b erhaltenen Suspension einen Farbstoff, der in Form der freien Säure der Formel (102) 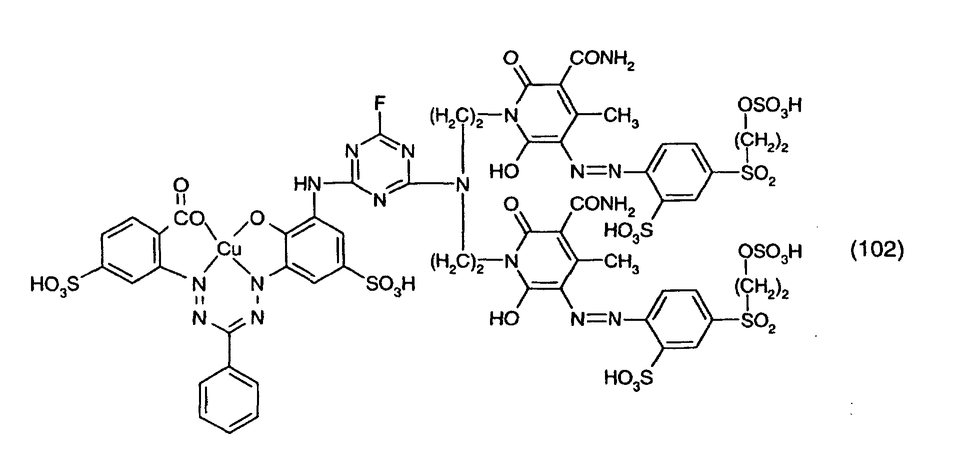 entspricht und Baumwolle in grünen Farbtönen mit guten Allgemeinechtheiten färbt.

Beispiel 28: Zur gemäss Beispiel 24 erhaltenen Suspension des gelben Farbstoffs wird die gemäss Beispiel 26 erhaltene Lösung gegeben, wobei der pH durch Zugabe einer Natriumhydroxydlösung bei 7,5 bis 8 und die Temperatur bei 30 bis 40 °C gehalten wird. Zur erhaltenen Farbstofflösung gibt man 240 Teile Kochsalz. Nach einer Stunde filtriert man den ausgefallenen Farbstoff ab und trocknet im Vakuum bei 60°C. Man erhält 160,8 Teile einer Verbindung, die in Form der freien Säure der Formel (103) 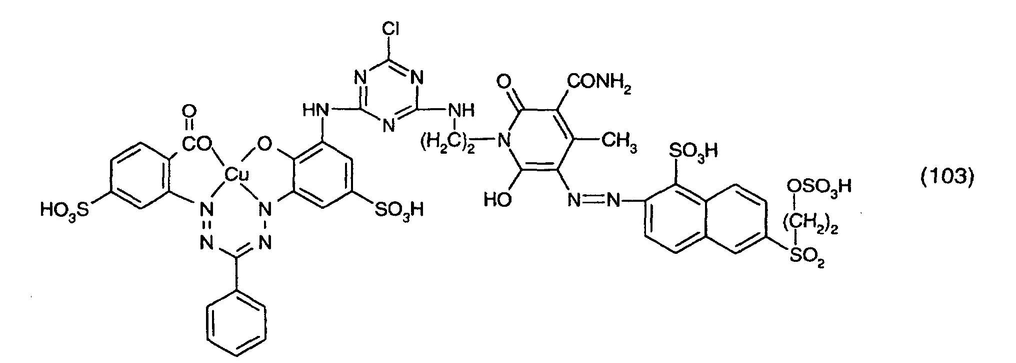 entspricht und Baumwolle in grünen Farbtönen mit guten Allgemeinechtheiten färbt.

Beispiele 29 bis 72: In Analogie zu der in den Beispielen 23a, 24, 27a und 28 beschriebenen Vorgehensweise erhält man aus den in den Beispielen 1 bis 22 beschriebenen Diazoverbindungen die Farbstoffe der folgenden allgemeinen Formel (106) 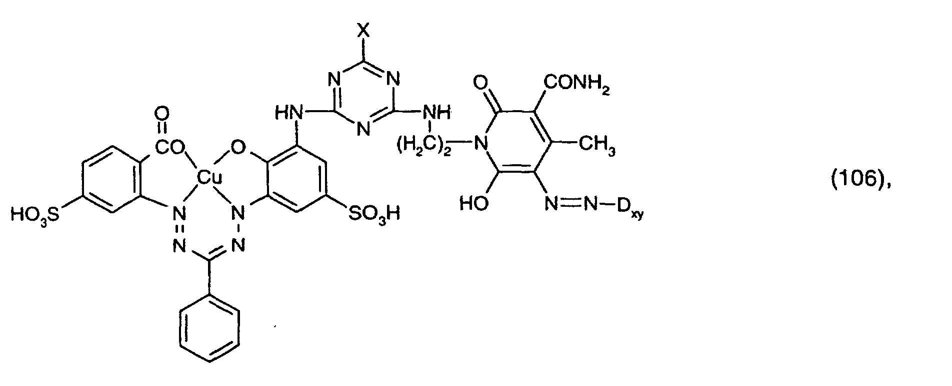 worin D_{xy} und X jeweils den in Tabelle 2 aufgeführten Resten entsprechen und dem Rest D_{xy} jeweils die in den Beispielen 1 bis 22 genannten Bedeutungen zukommen. Die Farbstoffe färben Baumwolle und Wolle in grünen Farbtönen mit guten Allgemeinechtheiten.

**Tabelle 2**

| Beispiel | D_{xy} | X | Beispiel | D_{xy} | X |
|---|---|---|---|---|---|
| 29 | D₁₀ | Cl | 51 | D₃₁ₚ | F |
| 30 | D₁₁ | F | 52 | D₁₂ | Cl |
| 31 | D₁₂ | F | 53 | D₁₃ | Cl |
| 32 | D₁₃ | F | 54 | D₁₄ | Cl |
| 33 | D₁₄ | F | 55 | D₁₅ | Cl |
| 34 | D₁₅ | F | 56 | D₁₆ | Cl |
| 35 | D₁₆ | F | 57 | D₁₇ | Cl |
| 36 | D₁₇ | F | 58 | D₁₈ | Cl |
| 37 | D₁₈ | F | 59 | D₁₉ | Cl |
| 38 | D₁₉ | F | 60 | D₂₀ | Cl |
| 39 | D₂₀ | F | 61 | D₂₁ | Cl |
| 40 | D₂₁ | F | 62 | D₂₂ | Cl |
| 41 | D₂₂ | F | 63 | D₂₃ | Cl |
| 42 | D₂₃ | F | 64 | D₂₄ | Cl |
| 43 | D₂₄ | F | 65 | D₂₅ | Cl |
| 44 | D₂₅ | F | 66 | D₂₆ | Cl |
| 45 | D₂₆ | F | 67 | D₂₇ | Cl |
| 46 | D₂₇ | F | 68 | D₂₈ | Cl |
| 47 | D₂₈ | F | 69 | D₂₉ | Cl |
| 48 | D₂₉ | F | 70 | D₃₀ | Cl |
| 49 | D₃₀ | F | 71 | D₃₁ₒ | Cl |
| 50 | D₃₁ₒ | F | 72 | D₃₁ₚ | Cl |

Beispiele 73 bis 88: In Analogie zu der in den Beispielen 25, 26, 27a und 28 beschriebenen Vorgehensweise erhält man aus den Kupfer-Formazankomplexen der Formel Fₓ-NH₂ Farbstoffe, die in Form der freien Säure der allgemeinen Formel (109) 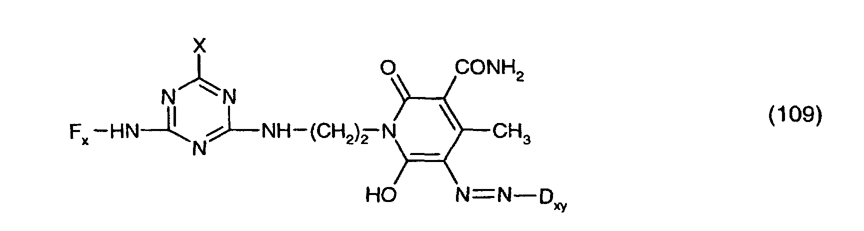 entsprechen, worin D_{xy}, Fₓ und X jeweils die in Tabelle 3 angegebenen Reste sind, wobei D_{xy} jeweils die in den Beispielen 1 und 2 genannten Bedeutungen hat und der Rest Fₓ jeweils für einen der nachfolgend angegebenen Formazanreste steht. Die Farbstoffe färben Baumwolle in grünen Farbtönen mit guten Allgemeinechtheiten.

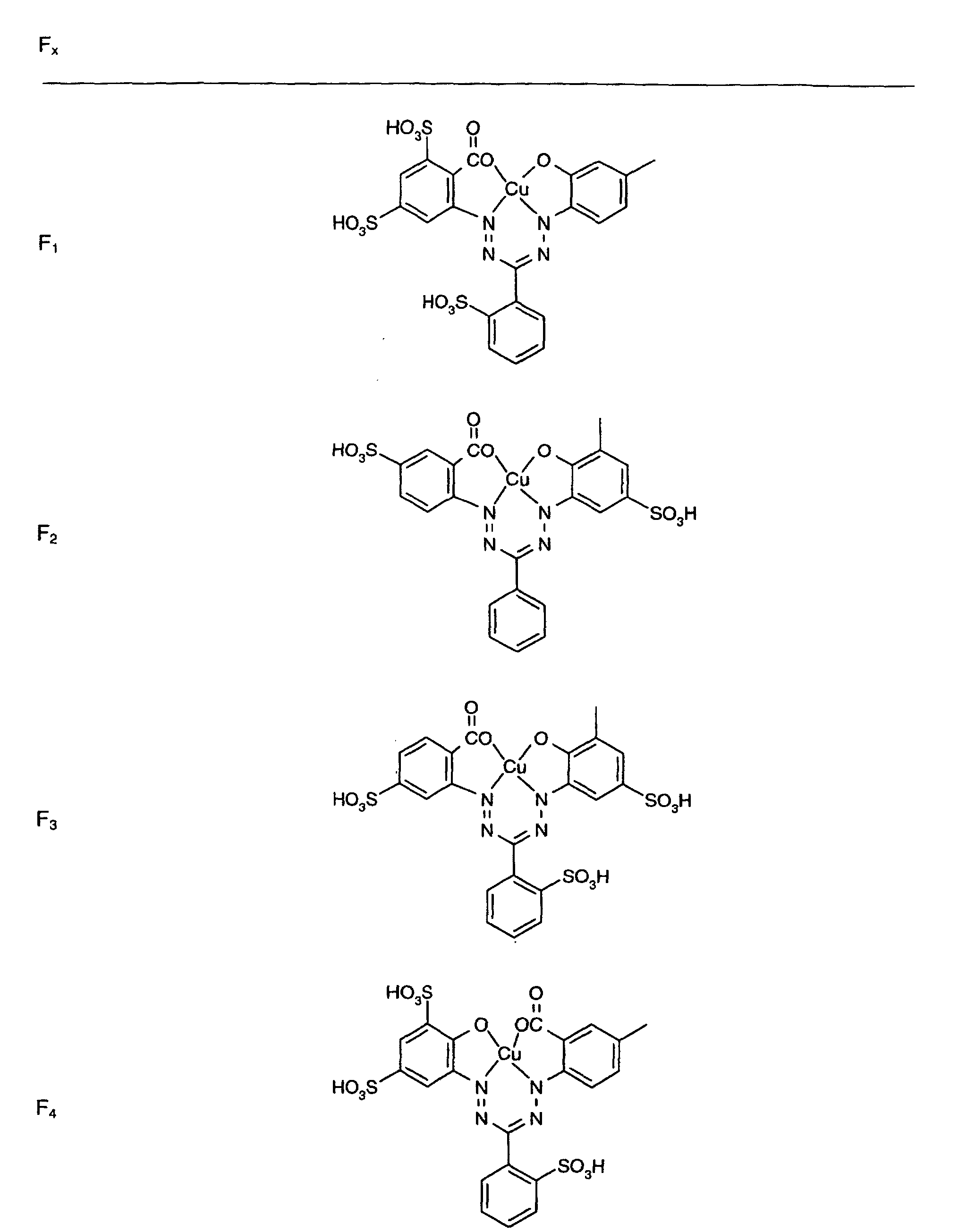

**Tabelle 3**

| Beispiel | D_{xy} | Fₓ | X |
|---|---|---|---|
| 73 | D₁₀ | F₁ | F |
| 74 | D₁₀ | F₂ | F |
| 75 | D₁₀ | F₃ | F |
| 76 | D₁₀ | F₄ | F |
| 77 | D₁₀ | F₁ | Cl |
| 78 | D₁₀ | F₂ | Cl |
| 79 | D₁₀ | F₃ | Cl |
| 80 | D₁₀ | F₄ | Cl |
| 81 | D₁₁ | F₁ | F |
| 82 | D₁₁ | F₂ | F |
| 83 | D₁₁ | F₃ | F |
| 84 | D₁₁ | F₄ | F |
| 85 | D₁₁ | F₁ | Cl |
| 86 | D₁₁ | F₂ | Cl |
| 87 | D₁₁ | F₃ | Cl |
| 88 | D₁₁ | F₄ | Cl |

### Färbevorschrift I

In 1500 Teile eines Färbebads, welches 45 g/l Natriumchlorid und 2 Teile des gemäss Beispiel 33a erhaltenen Reaktivfarbstoffs enthält, geht man bei 60°C mit 100 Teilen Baumwollgewebe ein. Nach 45 Minuten bei 60°C werden 20 g/l kalziniertes Soda zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

Alternativ zur angegebenen Vorschrift kann anstatt bei 60°C auch bei 80°C gefärbt werden.

### Färbevorschrift II

Es werden 0,1 Teile des Farbstoffs gemäss Beispiel 33a in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet.

### Druckvorschrift

3 Teile der gemäss Beispiel 33a erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfon-saures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel (1) 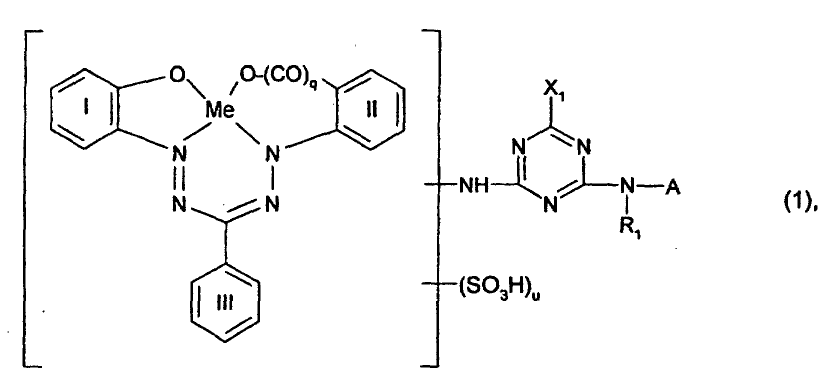 worin
Me Cu oder Ni ist,
R₁ Wasserstoff oder gegebenenfalls substituiertes C₁-C₄-Alkyl bedeutet oder R₁ die Bedeutung von A hat,
X₁ Halogen, Hydroxy, C₁-C₄-Alkoxy, gegebenenfalls substituiertes C₁-C₄-Alkylthio oder Amino oder ein gegebenenfalls weitere Heteroatome enthaltender N-Heterocyclus ist,
u für die Zahl 1, 2, 3 oder 4 steht,
q die Zahl 0 oder 1 ist,
die Benzolringe I, II oder III gegebenenfalls weitersubstituiert sind, und
A für einen Rest der Formel (3) 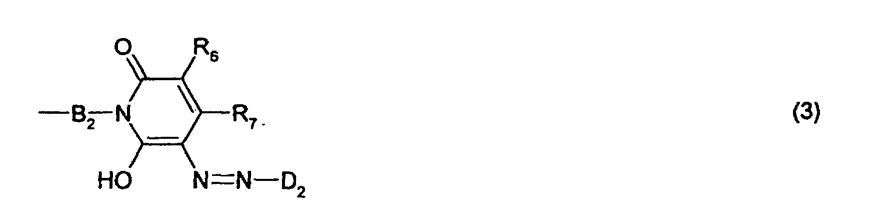
steht, worin
B₂ ein aliphatisches Brückenglied ist,
R₆ Wasserstoff, Cyano, Carbamoyl oder Sulfomethyl ist,
R₇ Wasserstoff oder C₁-C₄-Alkyl ist, und
D₂ dem Rest der Formel (9a), (9b), (9c), (9d), (9e) oder (9f) 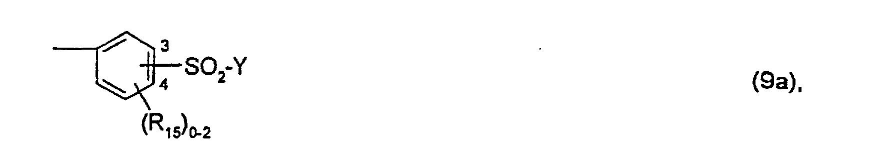 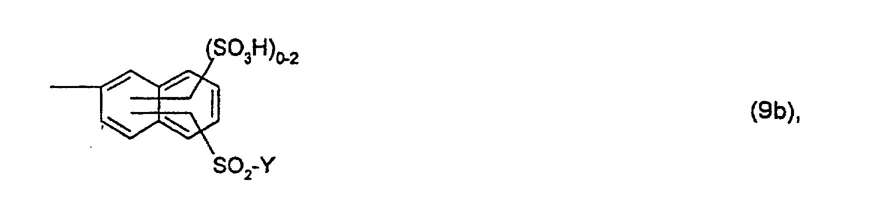 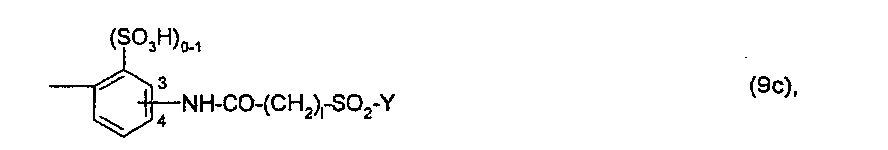 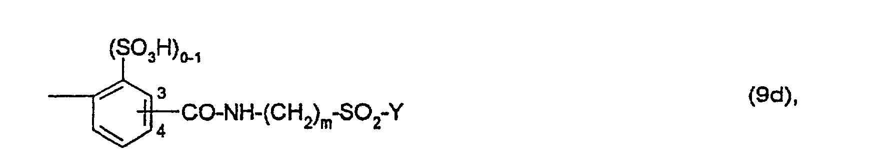 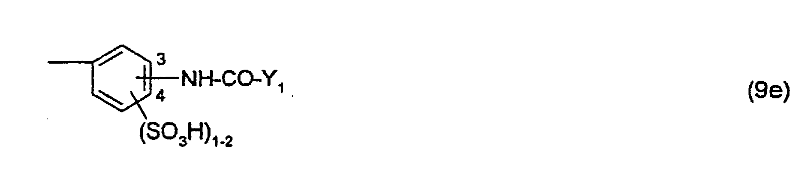 oder 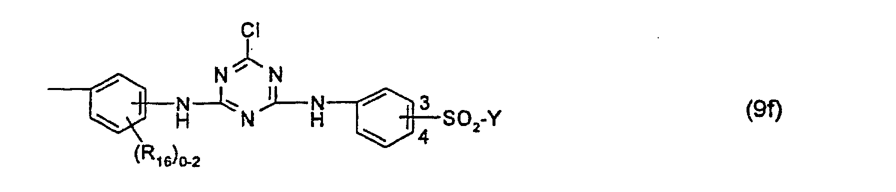 entspricht, worin
(R₁₅)₀₋₂ und (R₁₆)₀₋₂ unabhängig voneinander für 0 bis 2 gleiche oder voneinander verschiedene Substituenten ausgewählt aus der Gruppe Halogen, C₁-C₄-Alkyl, C₁-C₄-Alkoxy und Sulfo stehen,
Y Vinyl, β-Chlorethyl oder β-Sulfatoethyl ist,
Y₁ für eine Gruppe -CH(Br)-CH₂-Br oder -C(Br)=CH₂ steht, und
I und m unabhängig voneinander die Zahl 2 oder 3 sind, wobei
der Farbstoff der Formel (1) mindestens zwei Sulfogruppen enthält.

2. Reaktivfarbstoffe gemäss Anspruch 1, **dadurch gekennzeichnet, dass** Me Cu bedeutet.

3. Reaktivfarbstoffe gemäss einem der Ansprüche 1 und 2, **dadurch gekennzeichnet, dass** R₁ Wasserstoff, gegebenenfalls durch Hydroxy substituiertes C₁-C₄-Alkyl oder einen Rest A, insbesondere Wasserstoff oder einen Rest A, bedeutet.

4. Reaktivfarbstoffe gemäss einem der Ansprüche 1 bis 3, **dadurch gekennzeichnet, dass** X₁ Chlor oder Fluor bedeutet.

5. Reaktivfarbstoffe gemäss einem der Ansprüche 1 bis 4, **dadurch gekennzeichnet, dass** q die Zahl 1 ist.

6. Reaktivfarbstoffe gemäss einem der Ansprüche 1 bis 5, **dadurch gekennzeichnet, dass** B₂ geradkettiges oder verzweigtes C₂-C₆-Alkylen bedeutet

7. Reaktivfarbstoffe gemäss einem der Ansprüche 1 bis 6, **dadurch gekennzeichnet, dass** der Formazanrest im Farbstoff der Formel (1) einem Rest der Formel (11) oder (12) 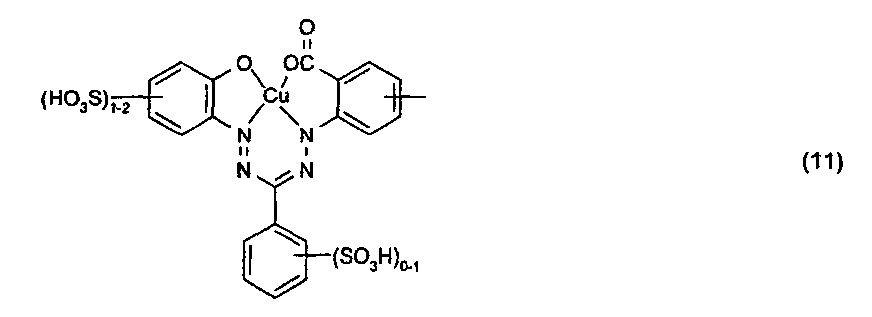 oder 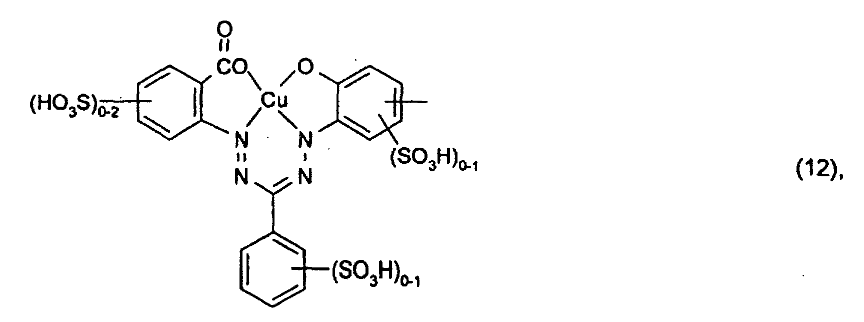 entspricht.

8. Reaktivfarbstoffe gemäss Anspruch 1, **dadurch gekennzeichnet, dass** sie der Formel (1a) 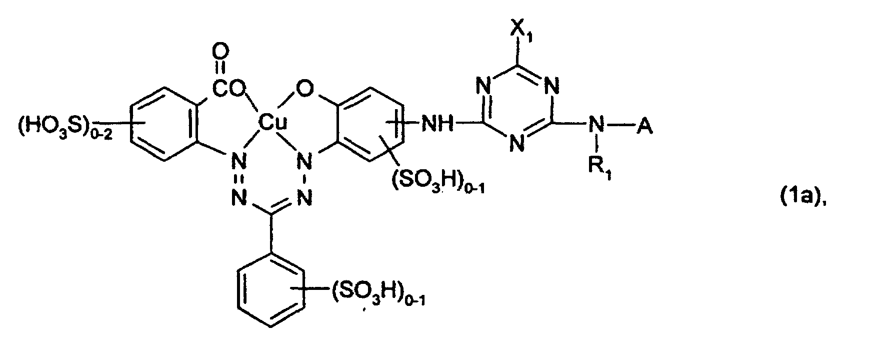 entsprechen, worin
X₁ Fluor oder Chlor ist,
R₁ Wasserstoff bedeutet oder R₁ die Bedeutung von A hat, und
A für einen Rest der Formel (3a) 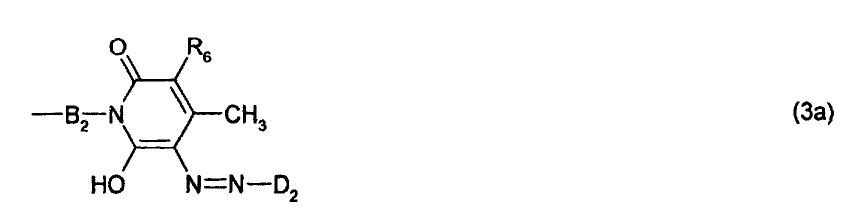
steht, worin
B₂ geradkettiges oder verzweigtes C₂-C₆-Alkylen ist,
D₂ einem Rest der Formel (9a), (9b), (9c), (9d), (9e) oder (9f) entspricht, und
R₆ Carbamoyl oder Sulfomethyl ist.

9. Verfahren zur Herstellung von Reaktivfarbstoffen gemäss Anspruch 1, **dadurch gekennzeichnet, dass** man je in etwa 1 Moläquivalent einer Verbindung der Formel (13) 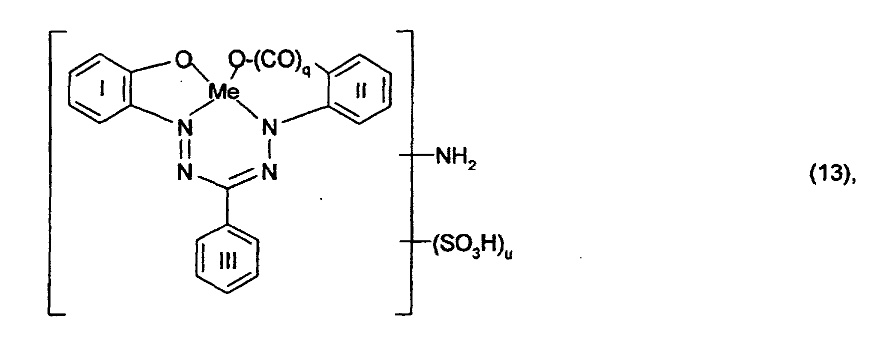 eine Verbindung der Formel (14) 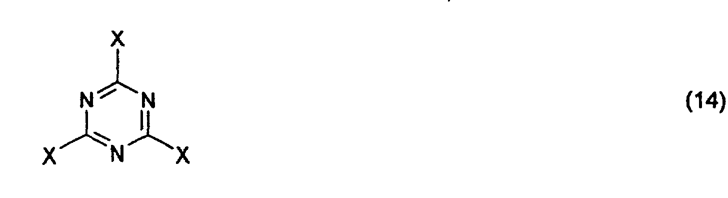 und ein Amin der Formel (15) 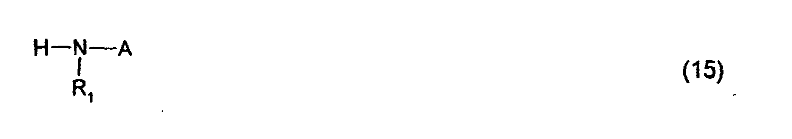 in beliebiger Reihenfolge miteinander umsetzt, wobei A, Me, R₁, u und q die in Anspruch 1 angegebenen Bedeutungen haben und X Halogen bedeutet.

10. Verwendung von Reaktivfarbstoffen gemäss einem der Ansprüche 1 bis 8 bzw. der gemäss Anspruch 9 erhaltenen Reaktivfarbstoffe zum Färben oder Bedrucken von hydroxylgruppenhaltigen oder stickstoffhaltigen Fasermaterialien.

11. Verwendung gemäss Anspruch 10, **dadurch gekennzeichnet, dass** man cellulosehaltige Fasermaterialien, insbesondere baumwollhaltige Fasermaterialien, färbt oder bedruckt.

## Claims

1. A reactive dye of the formula (1) 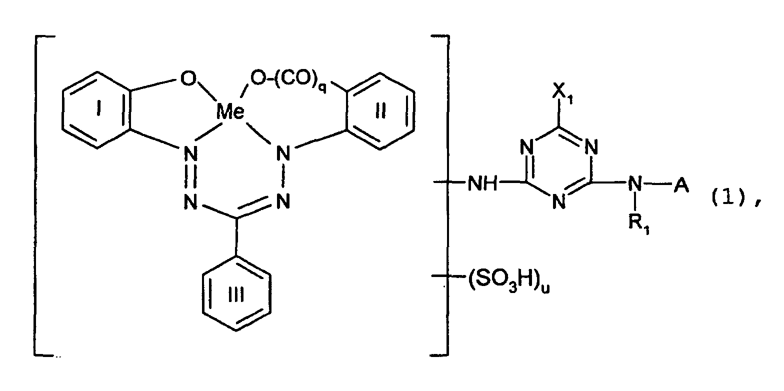 in which
Me is Cu or Ni,
R₁ is hydrogen or substituted or unsubstituted C₁-C₄alkyl or R₁ is as defined for A,
X₁ is halogen, hydroxyl, C₁-C₄alkoxy, substituted or unsubstituted C₁-C₄alkylthio or amino or is an N-heterocyclic radical which may contain further heteroatoms,
u is the number 1, 2, 3 or 4,
q is the number 0 or 1,
the benzo rings I, II or III are unsubstituted or further substituted and
A is a radical of the formula (3) 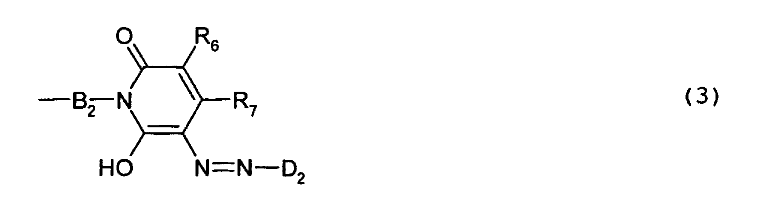
in which
B₂ is an aliphatic bridge member,
R₆ is hydrogen, cyano, carbamoyl or sulfomethyl,
R₇ is hydrogen or C₁-C₄alkyl and
D₂ is the radical of the formula (9a), (9b), (9c), (9d), (9e) or (9f) 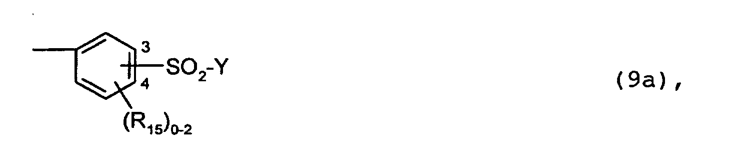 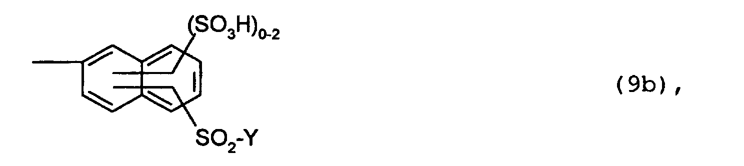 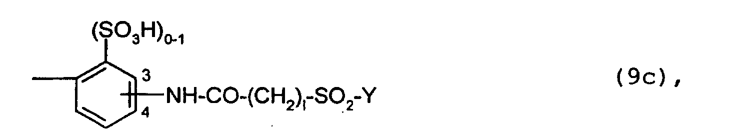 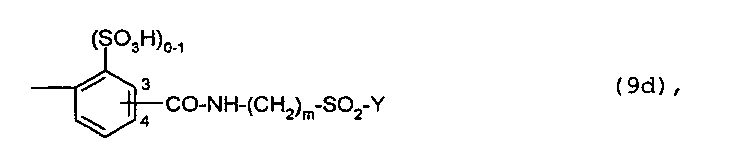 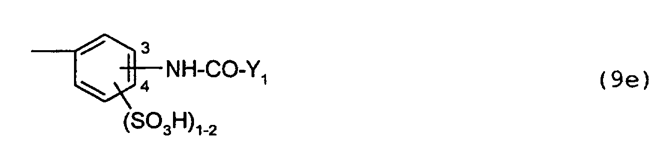 or 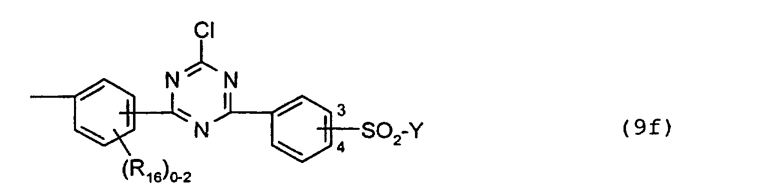
in which
(R₁₅)₀₋₂ and (R₁₆)₀₋₂ independently of one another are 0 to 2 identical or different substituents chosen from the group consisting of halogen, C₁-C₄alkyl, C₁-C₄alkoxy and sulfo,
Y is vinyl, β-chloroethyl or β-sulfatoethyl,
Y₁ is a group -CH(Br)-CH₂-Br or -C(Br)=CH₂ and
1 and m independently of one another are the number 2 or 3, the dye of the formula (1) containing at least two sulfo groups.

2. A reactive dye according to claim 1, wherein Me is Cu.

3. A reactive dye according to either claim 1 or claim 2, wherein
R₁ is hydrogen, C₁-C₄alkyl which is substituted by hydroxyl or a radical A, in particular hydrogen or a radical A.

4. A reactive dye according to any one of claims 1 to 3, wherein
X₁ is chlorine or fluorine.

5. A reactive dye according to any one of claims 1 to 4, wherein
q is the number 1.

6. A reactive dye according to any one of claims 1 to 5, wherein
B₂ is straight-chain or branched C₂-C₆alkylene.

7. A reactive dye according to any one of claims 1 to 6, wherein the formazan radical in the dye of the formula (1) is a radical of the formula (11) or (12) 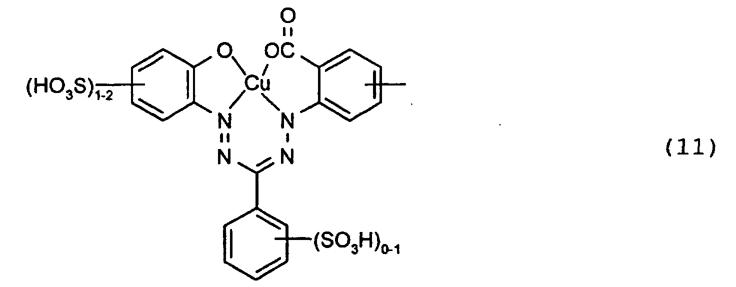 or

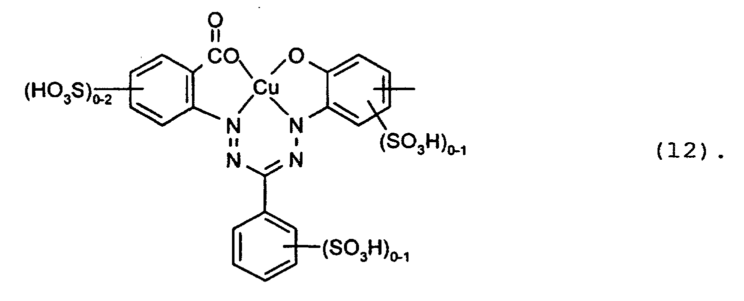

8. A reactive dye according to claim 7, which has the formula (1a) 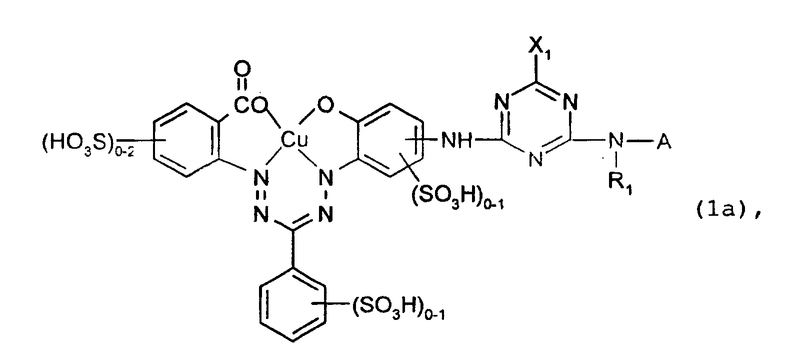 in which
X₁ is fluorine or chlorine,
R₁ is hydrogen or R₁ is as defined for A and
A is a radical of the formula (3a) 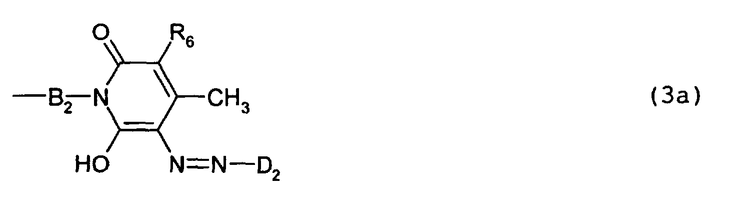
in which
B₂ is straight-chain or branched C₂-C₆alkylene,
D₂ is a radical of the formula (9a), (9b), (9c), (9d), (9e) or (9f) and,
R₆ is carbamoyl or sulfomethyl.

9. A process for the preparation of a reactive dye according to claim 1, which comprises reacting in each case about 1 molar equivalent of a compound of the formula (13) 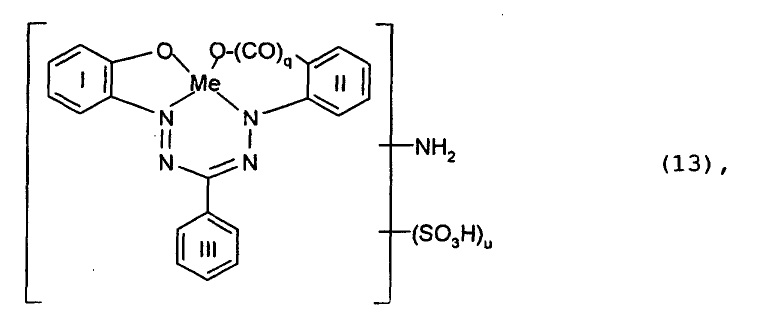 a compound of the formula (14) 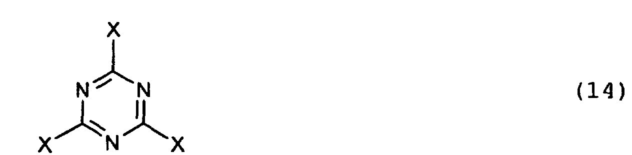 and an amine of the formula (15) 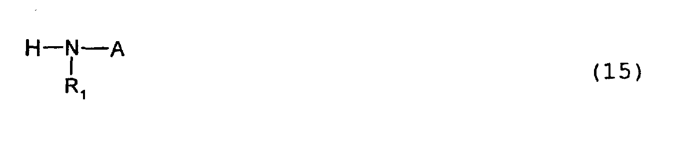 with one another in any sequence, where A, Me, R₁, u and q are as defined in claim 1 and X is halogen.

10. The use of a reactive dye according to any one of claims 1 to 8 or a reactive dye obtained according to claim 9 for dyeing or printing fibre materials containing hydroxyl groups or containing nitrogen.

11. The use according to claim 10, wherein cellulosic fibre materials, in particular fibre materials containing cotton, are dyed or printed.

## Revendications

1. Colorants réactifs de formule (1) 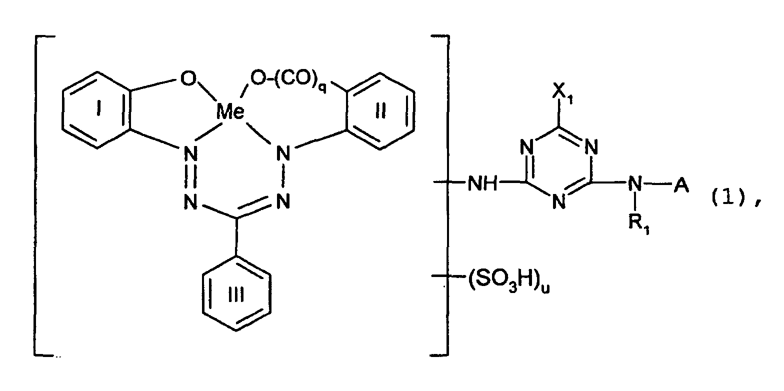 dans laquelle
Me est Cu ou Ni,
R₁ représente un atome d'hydrogène ou un groupe alkyle en C₁ à C₄ éventuellement substitués ou R₁ a la signification de A,
X₁ est un halogène, un groupe hydroxy, alcoxy en C₁ à C₄, alkylthio en C₁ à C₄ éventuellement substitué ou amino ou un N-hétérocycle contenant éventuellement d'autres hétéroatomes,
u représente le nombre 1, 2, 3 ou 4,
q est le nombre 0 ou 1,
les cycles benzéniques I, II ou III sont éventuellement encore substitués, et
A représente un groupe de formule (3) 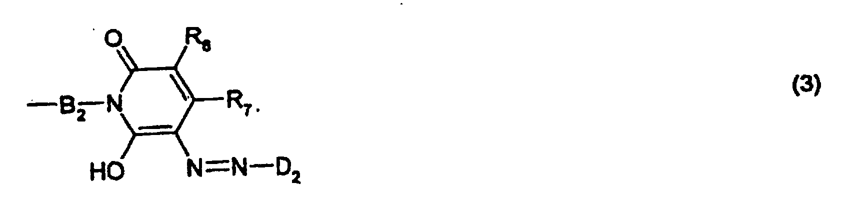
dans laquelle
B₂ est un groupe intercalaire aliphatique,
R6 est un atome d'hydrogène, un groupe cyano, carbamoyle ou sulfométhyle,
R7 est un atome d'hydrogène ou un groupe alkyle en C₁ à C₄, et
D₂ correspond au reste de la formule (9a), (9b), (9c), (9d), (9e) ou (9f) 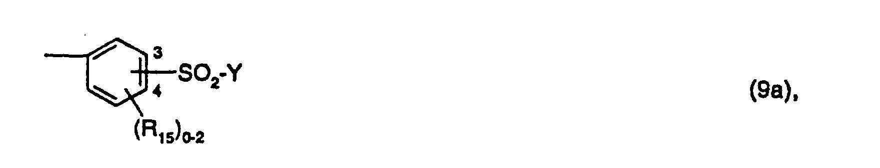 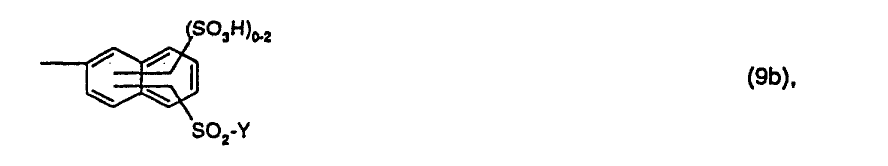 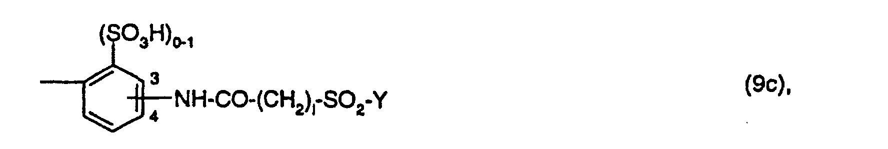 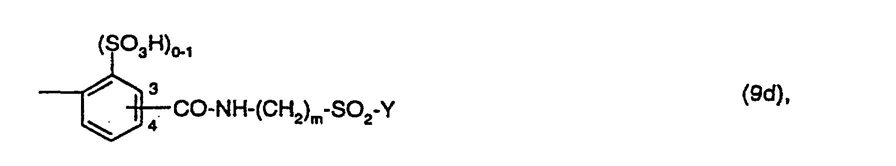 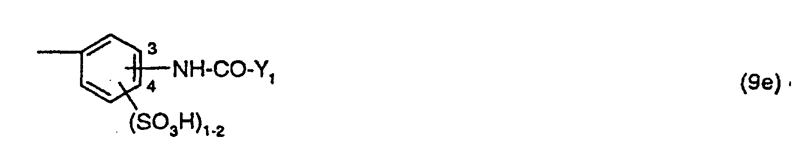 ou 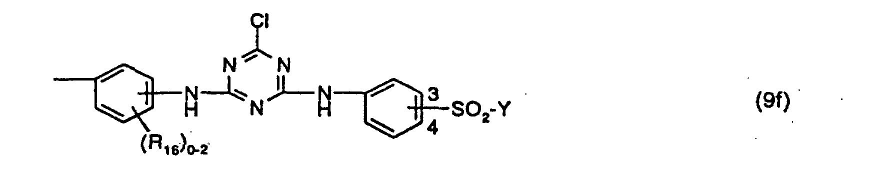
dans lesquelles
(R₁₅)₀₋₂ et (R₁₆)₀₋₂ représentent indépendamment l'un de l'autre de 0 à 2 substituants identiques ou différents entre eux choisis dans le groupe d'un atome d'halogène, un groupe alkyle en C₁ à C₄, alcoxy en C₁ à C₄ et sulfo,
Y est un groupe vinyle, β-chloroéthyle ou β-sulfatoéthyle,
Y₁ représente un groupe -CH(Br)-CH₂-Br ou -C(Br)=CH₂, et
l et m sont indépendamment l'un de l'autre le nombre 2 ou 3,
le colorant de formule (1) contenant au moins deux groupes sulfo.

2. Colorants réactifs selon la revendication 1, **caractérisés en ce que** Me représente Cu.

3. Colorants réactifs selon une des revendications 1 et 2, **caractérisés en ce que** R₁ représente un atome d'hydrogène, un groupe alkyle en C₁ à C₄ éventuellement substitué par un hydroxy ou un groupe A, en particulier un atome d'hydrogène ou un groupe A.

4. Colorants réactifs selon une des revendications 1 à 3, **caractérisés en ce que** X₁ représente le chlore ou le fluor.

5. Colorants réactifs selon une des revendications 1 à 4, **caractérisés en ce que** q est le nombre 1.

6. Colorants réactifs selon une des revendications 1 à 5, **caractérisés en ce que** B₂ est un groupe alkylène en C₂ à C₆ à chaîne linéaire ou ramifiée.

7. Colorants réactifs selon une des revendications 1 à 6, **caractérisés en ce que** le groupe formazan dans le colorant de formule (1) représente un groupe de formule (11) ou (12) 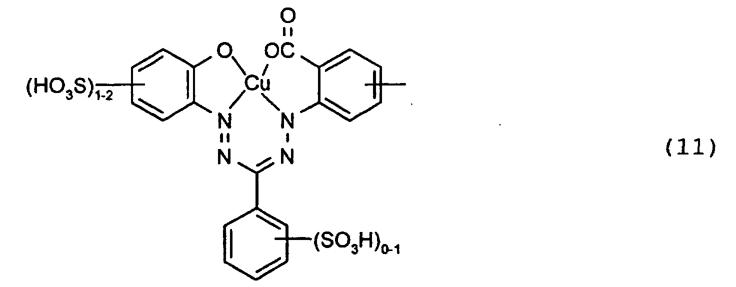 or

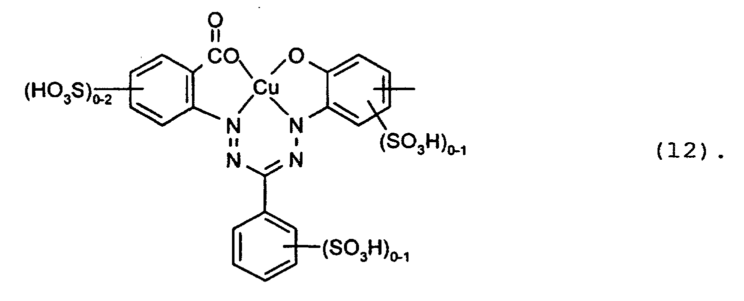

8. Colorants réactifs selon la revendication 1, **caractérisés en ce qu'**ils correspondent à la formule (1a) 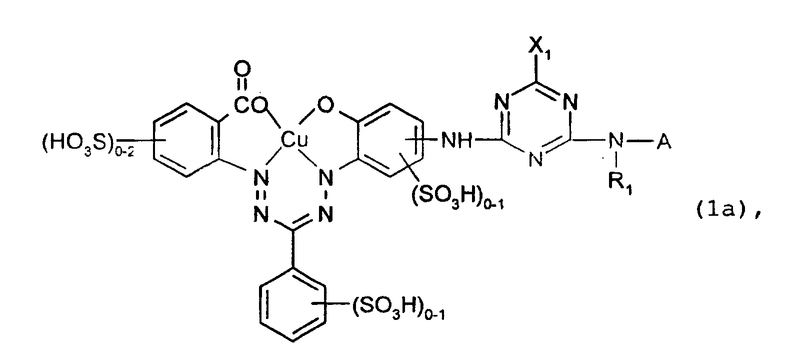 dans laquelle
X₁ est le fluor ou le chlore,
R₁ représente un atome d'hydrogène ou R₁ a la signification de A, et
A représente un groupe de formule (3a) 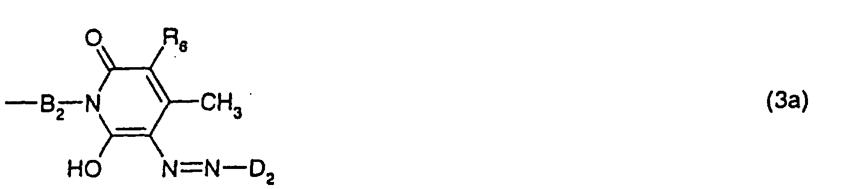
dans laquelle
B₂ est un groupe alkylène en C₂ à C₆ à chaîne linéaire ou ramifiée,
D2 correspond à un reste de formule (9a), (9b), (9c), (9d), (9e) ou (9f), et
R₆ est un groupe carbamoyle ou sulfométhyle.

9. Procédé pour la préparation de colorants réactifs selon la revendication 1, **caractérisé en ce qu'**on met à réagir ensemble dans un ordre quelconque respectivement dans environ 1 équivalent molaire d'un composé de formule (13) 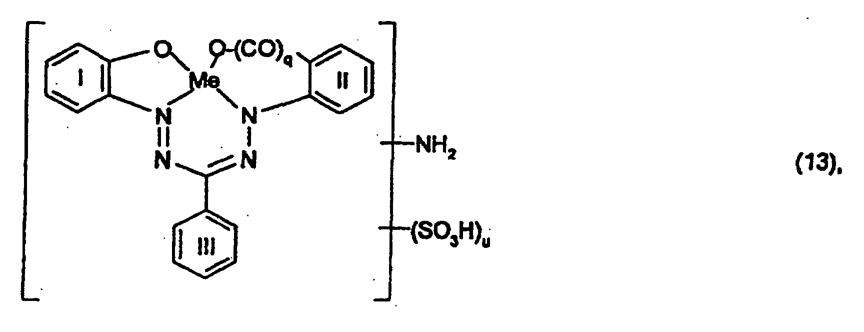 un composé de formule (14) 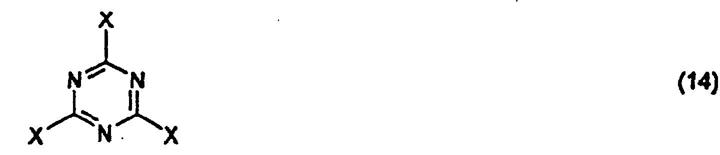 et une amine de formule (15) 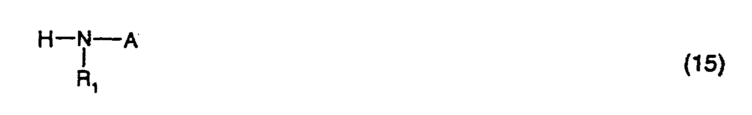 A, Me, R₁ , u et q ayant les significations indiquées à la revendication 1 et X représentant un halogène.

10. Utilisation de colorants réactifs selon une des revendications 1 à 8 ou des colorants réactifs obtenus selon la revendication 9 pour la teinture ou l'impression de matériaux fibreux contenant des groupes hydroxyle ou azotés.

11. Utilisation selon la revendication 10, **caractérisée en ce qu'**on teinte ou on imprime des matériaux fibreux cellulosiques, en particulier des matériaux fibreux contenant du coton.
